(19) **Europäisches Patentamt / European Patent Office / Office européen des brevets**

(11) **EP 2 760 233 A1**

(12) **EUROPEAN PATENT APPLICATION**

(43) Date of publication:
30.07.2014 Bulletin 2014/31

(51) Int Cl.:
*H04W 16/28* (2009.01)

(21) Application number: 14165450.9

(22) Date of filing: 24.02.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 24.02.2010 US 307777 P
25.02.2010 US 308218 P
29.04.2010 US 329303 P

(62) Document number(s) of the earlier application(s) in accordance with Art. 76 EPC:
11707290.0 / 2 540 108

(71) Applicant: **Interdigital Patent Holdings, Inc.**
**Wilmington, DE 19809 (US)**

(72) Inventors:
• **Ahmad, Saad**
**Montreal, Québec H2X 3R4 (CA)**
• **Digirolamo, Rocco**
**Laval, Québec H7K 3Y3 (CA)**
• **Gauvreau, Jean-Louis**
**La Prairie, Québec J5R 6G7 (CA)**
• **Grandhi, Sudheer A.**
**Pleasanton, CA California 94588 (US)**

(74) Representative: **Åberg, Sofia Gertrud**
**AWAPATENT AB**
**P.O. Box 5117**
**200 71 Malmö (SE)**

Remarks:
This application was filed on 22-04-2014 as a divisional application to the application mentioned under INID code 62.

(54) **Communication using directional antennas**

(57) Method and apparatus having a beamforming antenna generates a plurality of directional antenna beams. A discovery beacon is generated for use in associating with a wireless transmit/receive unit (WTRU). The discovery beacon is transmitted to a plurality of sectors using coarsely focused directional antenna beams. A WTRU may receive one of the coarsely focused directional antenna beams, and may then transmit a response message. Finely focused directional antenna beams are establishing for packet data transmission. A periodic beacon may then be transmitted to the WTRU using one of the coarsely focused directional antenna beams.

FIGURE 2

EP 2 760 233 A1

**Description**

**CROSS REFERENCE TO RELATED APPLICATIONS**

This application claims the benefit of U.S. Provisional Application No. 61/307,777 filed February 24, 2010, U.S. Provisional Application No. 61/308,218 filed February 25, 2010, and U.S. Provisional Application No. 61/329,303 filed April 29, 2010, the contents of which are hereby incorporated by reference herein.

**BACKGROUND**

In wireless communications, smart antennas have the ability to change radio beam transmission and reception patterns to make the best use of the wireless transmission environment. Smart antennas are advantageous as they provide relatively high radio link gain without adding excessive cost or system complexity. A mobile stations (STA) or an access point (AP) may use smart antennas to form directional transmit and receive beams to achieve high performance in poor radio environments.

Wireless communication systems operating in the 2.4 GHz and 5 GHz bands, such as IEEE 802.11 wireless local area networks (WLAN), utilize omni-directional beacons for system advertisement and discovery. Compared to higher frequency bands, the transmission range in the 2.4 GHz and 5 GHz bands is higher and less "antenna gain" is required to transmit or receive the signal. However, a STA operating in a high frequency WLAN, such as the 60 GHz band, radio environment conditions may often be sufficiently degraded when viewed in all directions using an omni-directional antenna. The radio environment degradation increases as the frequency band increases, and it becomes more difficult for a signal to penetrate obstacles and atmospheric absorption degrades the signal.

IEEE 802.11 wireless transmit/receive units (WTRUs) may rely on Carrier Sense Multiple Access with Collision Avoidance (CSMA/CA) and the Request to Send/Clear to send (RTS/CTS) mechanism to reduce frame collisions. When using directional antennas, a hidden node problem may be more common, since WTRU transmission and reception is directed to a particular geographic area (or sector).

WTRUs utilizing directional antennas are also confronted with a deafness problem. Deafness occurs when a WTRU's transmission is not received by a neighbor WTRU due to the antenna of the neighbor WTRU receiving in another direction (in other words, the neighbor WTRU may not be listening in the proper direction). Deafness may occur when the neighbor WTRU is in communication with another WTRU.

**SUMMARY**

A method and apparatus having a beamforming antenna generates a plurality of directional antenna beams. A discovery beacon is generated for use in associating with a WTRU. The discovery beacon is transmitted to a plurality of sectors using coarsely focused directional antenna beams. A WTRU may receive one of the coarsely focused directional antenna beams, and may then transmit a response message. Finely focused directional antenna beams are establishing for packet data transmission. A periodic beacon may then be transmitted to the WTRU using one of the coarsely focused directional antenna beams.

Protection mechanisms for directional WTRUs include directional ready to send (DRTS) and directional clear to send (DCTS) frames. A WTRU having a directional antenna may use the directional protection mechanisms in each sector associated with the directional antenna. Deafness and hidden node problems arising from the use of multiple WTRUs using directional antennas are addressed using DRTS and DCTS frames. Directional free to receive (DFTR) are also disclosed.

**BRIEF DESCRIPTION OF THE DRAWINGS**

A more detailed understanding may be had from the following description, given by way of example in conjunction with the accompanying drawings wherein:

Figure 1A is a system diagram of an example communications system in which one or more disclosed embodiments may be implemented;
Figure 1B is a system diagram of an example wireless transmit/receive unit (WTRU) that may be used within the communications system illustrated in FIGURE 1A;
Figure 1C is a system diagram of an example radio access network and an example core network that may be used within the communications system illustrated in FIGURE 1A;
Figure 2 is a method flow diagram of a method for transmitting discovery beacons, periodic beacons, and packet data transfer;

Figure 3 is an illustration of an example of discovery beacon transmission using coarse directional beams;

Figure 4 is an illustration of discovery beacon transmission, periodic beacon transmission, and packet data transfer using directional antenna beams;

Figure 5 is a signal flow diagram of discovery beacon transmission, periodic beacon transmission, and packet data transfer using directional antenna beams;

Figure 6 is an illustration of WTRU scanning for discovery beacon transmission using directional antenna beams;

Figure 7 is a diagram of discovery beacon transmission followed by response period in accordance with one embodiment;

Figure 8 is a diagram of discovery beacon transmission followed by response period in accordance with one embodiment;

Figure 9 is a diagram of WTRU fine beam tuning for reception of discovery beacons transmitted by an AP;

Figure 10 is a method flow diagram for transmission of space-frequency beacons transmitted by an AP;.

Figure 11 depicts an example of a deafness scenario in which the destination WTRU is in communication with another WTRU;

Figure 12 is a diagram of the WTRUs of Figure 11 implementing the a QDRTS/QDCTS protection mechanism;

Figure 13 is a diagram of QDRTS and QDCTS frame transmission and reception in sectors where a transmitting WTRU expects a recipient WTRU;

Figure 14 is a diagram of a first type of deafness problem contemplated by the present disclosure;

Figure 15 is a signal flow diagram of one solution to the deafness problem illustrated in Figure 14; and

Figure 16 is a diagram of a second type of deafness problem contemplated by the present disclosure.

## DETAILED DESCRIPTION

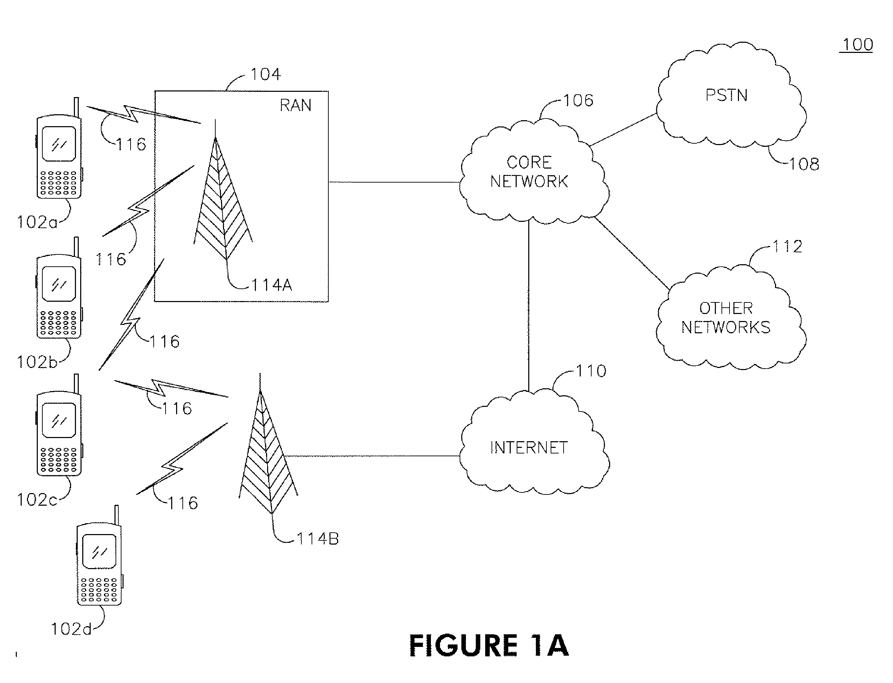

Figure 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in Figure 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in Figure 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in Figure 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in Figure 1A may be configured to communicate with the base station 114a, which may employ a cellular-based radio technology, and with the base station 114b, which may employ an IEEE 802 radio technology.

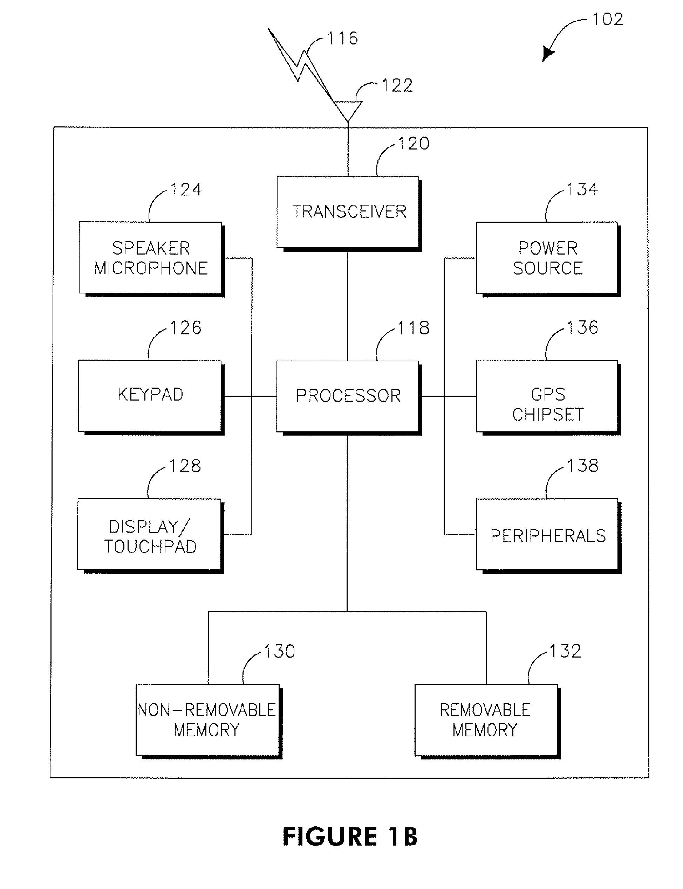

Figure 1B is a system diagram of an example WTRU 102. As shown in Figure 1B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in Figure 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 18 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

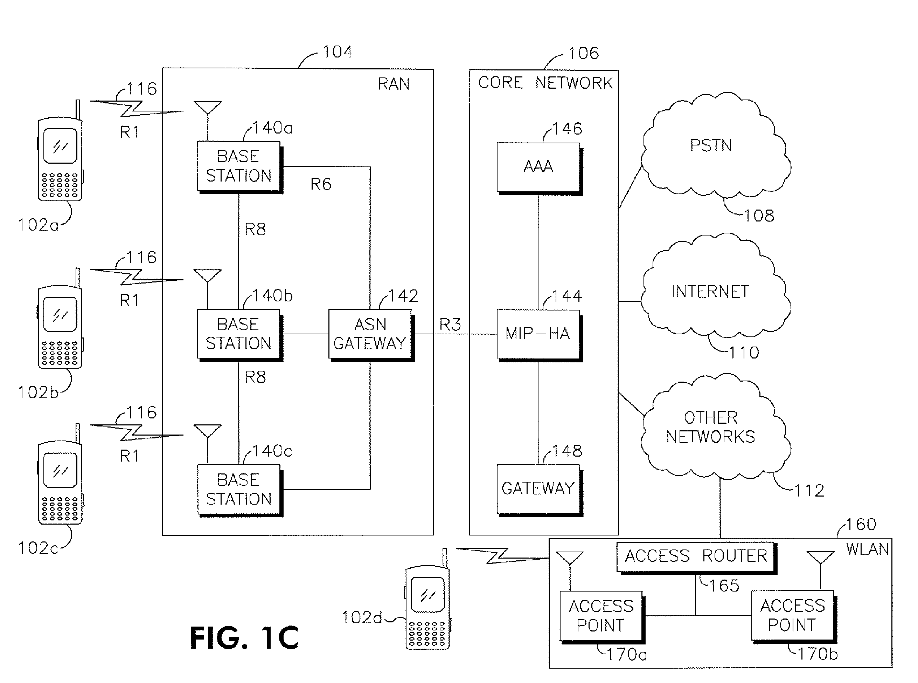

Figure 1C is a system diagram of the RAN 104 and the core network 106 according to an embodiment. The RAN 104 may be an access service network (ASN) that employs IEEE 802.16 radio technology to communicate with the WTRUs 102a, 102b, 102c over the air interface 116. As will be further discussed below, the communication links between the different functional entities of the WTRUs 102a, 102b, 102c, the RAN 104, and the core network 106 may be defined as reference points.

As shown in Figure 1C, the RAN 104 may include base stations 140a, 140b, 140c, and an ASN gateway 142, though it will be appreciated that the RAN 104 may include any number of base stations and ASN gateways while remaining consistent with an embodiment. The base stations 140a, 140b, 140c may each be associated with a particular cell (not shown) in the RAN 104 and may each include one or more transceivers for communicating with the WTRUs 102a, 102b, 102c over the air interface 116. In one embodiment, the base stations 140a, 140b, 140c may implement MIMO technology. Thus, the base station 140a, for example, may use multiple antennas to transmit wireless signals to, and receive wireless signals from, the WTRU 102a. The base stations 140a, 140b, 140c may also provide mobility management functions, such as handoff triggering, tunnel establishment, radio resource management, traffic classification, quality of service (QoS) policy enforcement, and the like. The ASN gateway 142 may serve as a traffic aggregation point and may be responsible for paging, caching of subscriber profiles, routing to the core network 106, and the like.

The air interface 116 between the WTRUs 102a, 102b, 102c and the RAN 104 may be defined as an R1 reference point that implements the IEEE 802.16 specification. In addition, each of the WTRUs 102a, 102b, 102c may establish a logical interface (not shown) with the core network 106. The logical interface between the WTRUs 102a, 102b, 102c and the core network 106 may be defined as an R2 reference point, which may be used for authentication, authorization, IP host configuration management, and/or mobility management.

The communication link between each of the base stations 140a, 140b, 140c may be defined as an R8 reference point that includes protocols for facilitating WTRU handovers and the transfer of data between base stations. The communication link between the base stations 140a, 140b, 140c and the ASN gateway 215 may be defined as an R6 reference point. The R6 reference point may include protocols for facilitating mobility management based on mobility events associated with each of the WTRUs 102a, 102b, 100c.

As shown in Figure 1C, the RAN 104 may be connected to the core network 106. The communication link between the RAN 104 and the core network 106 may defined as an R3 reference point that includes protocols for facilitating data transfer and mobility management capabilities, for example. The core network 106 may include a mobile IP home agent (MIP-HA) 144, an authentication, authorization, accounting (AAA) server 146, and a gateway 148. While each of the foregoing elements are depicted as part of the core network 106, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 144 may provide the WTRUs 102a, 102b, 102c with access to packet-switched networks, such as the Internet 110, to facilitate communications between the WTRUs 102a, 102b, 102c and IP-enabled devices. The AAA server 146 may be responsible for user authentication and for supporting user services. The gateway 148 may facilitate interworking with other networks. For example, the gateway 148 may provide the WTRUs 102a, 102b, 102c with access to circuit-switched networks, such as the PSTN 108, to facilitate communications between the WTRUs 102a, 102b, 102c and traditional land-line communications devices. In addition, the gateway 148 may provide the WTRUs 102a, 102b, 102c with access to the networks 112, which may include other wired or wireless networks that are owned and/or operated by other service providers.

Although not shown in Figure 1C, it will be appreciated that the RAN 104 may be connected to other ASNs and the core network 106 may be connected to other core networks. The communication link between the RAN 104 the other ASNs may be defined as an R4 reference point, which may include protocols for coordinating the mobility of the WTRUs 102a, 102b, 102c between the RAN 104 and the other ASNs. The communication link between the core network 106 and the other core networks may be defined as an R5 reference, which may include protocols for facilitating interworking between home core networks and visited core networks.

Other network 112 may further be connected to an IEEE 802.11 based wireless local area network (WLAN) 160. The WLAN 160 may include an access router 165. The access router may contain gateway functionality. The access router 165 may be in communication with a plurality of access points (APs) 170a, 170b. The communication between access router 165 and APs 170a, 170b may be via wired Ethernet (IEEE 802.3 standards), or any type of wireless communication protocol. AP 170a is in wireless communication over an air interface with WTRU 102d.

In order to communicate with an AP or base station, a WTRU needs to be able to discover the AP or base station in the case of an infrastructure mode network, or to discover other WTRU in the case of an adhoc mode network. In high frequency bands, such as the 60 GHz frequency band, discovery becomes difficult when high gain directional antennas are used. This is because a directional antenna transmits in a particular direction at a given time. The directional antenna steers itself to communicate in various directions. Scanning in every direction by steering or beam forming a directional antenna is very costly in terms of equipment and processing time.

A mechanism that reduces the cost associated with scanning using directional antennas is therefore desirable, particularly in high frequency bands, such as the 60 GHz band. In addition to efficient discovery of all devices within a coverage area of an access point, information regarding the relative location or radio location of a WTRU within the coverage area of an AP is desirable. This location information may be used by both the AP and the respective WTRUs associated with the AP in forming fine beams for high rate data transfer. Having knowledge of the location of WTRUs within the coverage area of an AP may also help avoid collision and bottlenecks in the network and solve other problem arising from directional communication (for example, deafness and hidden node type problems).

Spatial discovery is further complicated by the movement of the WTRUs within the coverage area of a given AP. As a WTRU moves with the coverage area of an AP, the network configuration and radio environment experienced by the WTRU, the AP, and potentially other WTRUs will change and may degrade. Beamforming adjustments are constantly required at both the AP and the WTRUs and this creates additional overhead signaling. Therefore, a mechanism for tracking WTRU movement within the coverage area of an AP may improve system performance.

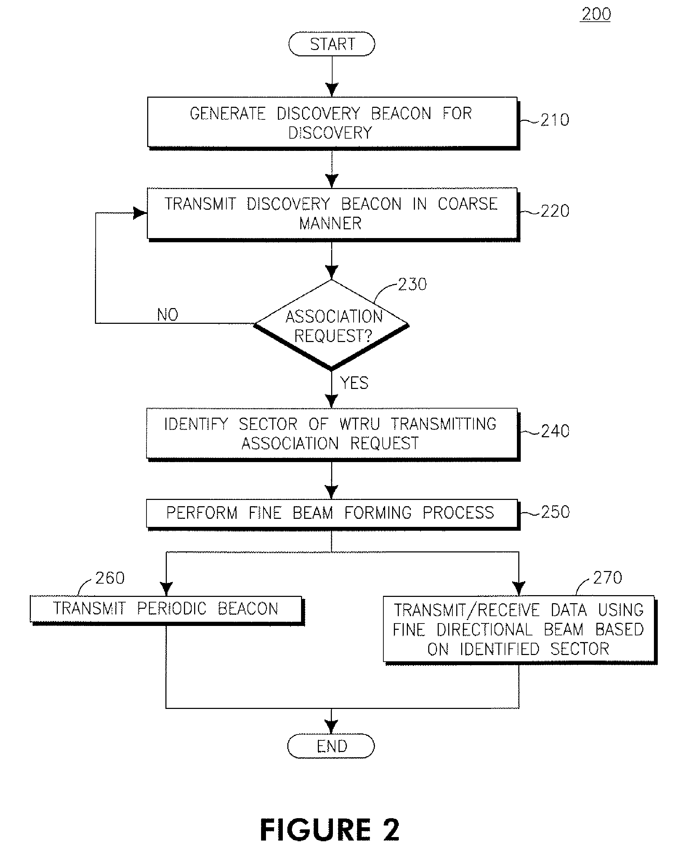

Referring to Figure 2, a method 200 for use in an AP is disclosed. At step 210, a discovery beacon is generated. The discovery beacon may be, for example, a beacon that includes various information necessary for AP discovery.

The discovery beacon may be a beacon in accordance with IEEE 802.11 standards. At step 220, the discovery beacon is transmitted by the AP in a coarse or quasi-omni directional manner. As will be described below, the coarse or quasi-omni directional manner in which the discovery beacon is transmitted may be accomplished by an omni-directional antenna. Alternatively, the coarse or quasi-omni directional manner of the discovery beacon transmission may be accomplished via a switch beam antenna or by a beam forming antenna, or by any other antenna system capable of producing directional antenna beams. The discovery beacon may be transmitted periodically, at a beacon interval, such as discussed in the IEEE 802.11 standards.

During periodic transmission of the discovery beacon in step 220, the AP determines whether any response (for example, association requests or probe request and the like) have been received from a WTRU within the coverage area of the AP in step 230. If an association request is received at the AP, the AP determines at step 240 the sector of the coverage area of the AP from which the WTRU transmitted the association request. A fine beamforming process may then be performed by the WTRU and the AP to develop a fine directional antenna beam in step 250. The fine beamforming process may be performed in accordance with IEEE 802.11 standards, and may include sounding a channel and communicating channel estimates and steering matrices between the WTRU and the AP. Once the WTRU that transmitted the association request completes association with the AP, two things occur at the AP. First, at step 260 the AP transmits a periodic beacon (using either a fine directional antenna beam based on the sector of the WTRU identified in step 240 or a coarse beam such as the one used for discovery beacon transmission). Second, at step 270 the AP and the WTRU transmit and receive packet data using a fine directional beam based on the sector of the WTRU identified in step 240.

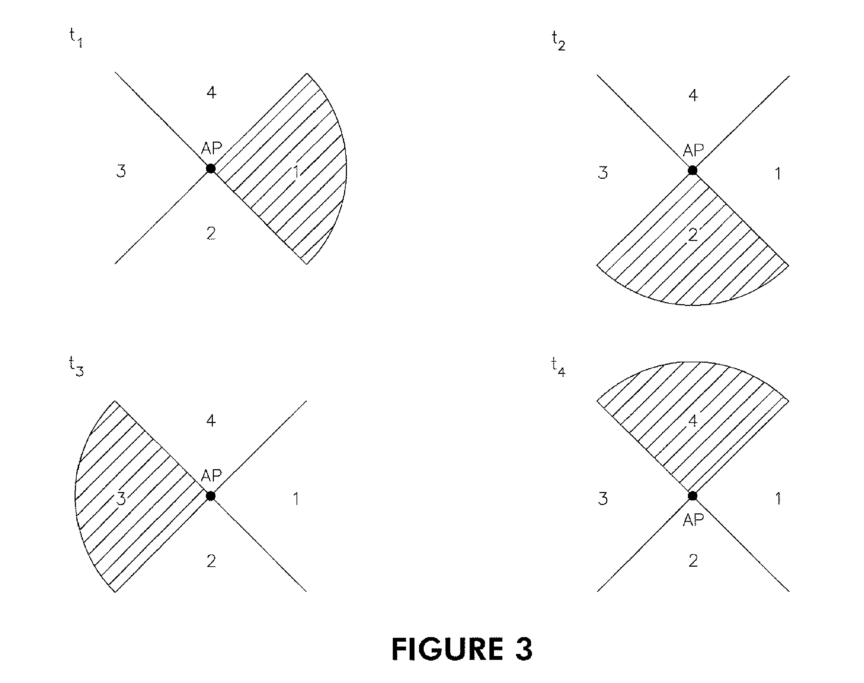

Referring to Figure 3, an illustration of an example of transmission of the discovery beacon in a coarse manner is shown. To initialize the beacon transmission, N directions are defined that sectorize the coverage area of a cell associated with the AP. In Figure 3, N=4, although N may be any number and 4 is chosen only for simplicity of description. At a first time interval, $t_1$, the AP transmits a discovery beacon with a half power beam width (HPBW) of 2pi/N in sector 1. In the second time interval, $t_2$, the AP transmits the discovery beacon in sector 2. In the third time interval, $t_3$, the AP transmits the discovery beacon in sector 3. In the fourth time interval, $t_4$, the AP transmits the discovery beacon in sector 4. This process continues in all N sectors in a time division manner. After each discovery beacon transmission, the AP listens for a response message (for example, an association request) transmitted from a WTRU. The AP may listen for a response message transmitted from a WTRU using the coarse directional beam that was used to transmit the beacon, or an omni-directional beam may be used.

The discovery beacon may contain: (1) basic content needed for functions including but not limited to, one or more of the following such as beacon detection, measurement, or association, (2) a train of pilot symbols which indentifies that an AP is present in a specific sector, (3) a train of mini beacons, for example, one train per coarse sector of size 's' where 's' is the number of coarse sectors associated with the AP, or (4) a subset of the periodic beacon content. This ensures that discovery beacons occupy less medium time and WTRUs trying to discover an AP expend minimal energy and time in detecting the discovery beacon. Once a discovery beacon is detected, the WTRU may send a probe request or association request message to the AP. The AP may respond by sending a probe response or association response and also switch to a periodic beacon for that sector.

The discovery beacon may further contain transmit beam identification information. The transmit beam identification information may be in the form of an index. This information may also be used in the periodic beacon. Such transmit beam identification information may be used in mobility functions. For example, a WTRU may report back the transmit beam identification information when sending response messages to the AP. This mechanism allows the AP to determine the location of the WTRU and allows the AP to track the motion of a WTRU as it moves through the coverage area of the AP. The WTRU may echo back to the AP the transmit beam identification information along with other information such as measurements (for example, signal strength, signal-to-interference ratio, and the like) or without any other information or measurements. Based on this WTRU reports of transmit beam identification information, the AP may make decisions such as adding periodic beacons to a sector based on load, and sending a discovery beacon more frequently in a sector.

The discovery beacon may contain less information than the periodic beacon. The discovery beacon may also use more robust encoding or stronger spread spectrum coding gain which would allow the discovery beacon to be sent with less directionality than the periodic beacon or the packet data, while maintaining the same range.

In one embodiment, the contents of discovery beacons are the same as the periodic beacons.

During the association process, either the AP or the WTRU may exchange antenna training information for use in generating a fine directional antenna beam to transfer packet data at high throughput rates. A fine directional antenna beam may be generated at either the AP, the WTRU, or both. The location of any WTRUs associated with the AP may be determined and stored based on the antenna training information. As mentioned above, the location of any WTRUs may be the WTRUs relative location or radio location. The location information may be stored in a management information base (MIB) of either the AP, the WTRU, or both.

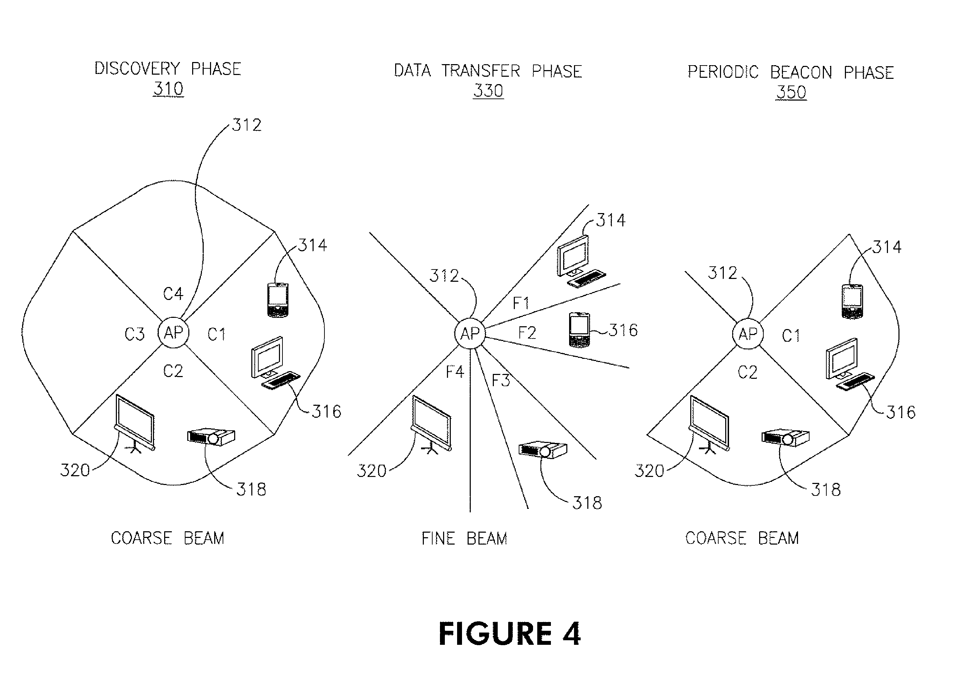

During packet data transmission, a periodic beacon may be transmitted by the AP. To reduce system overhead, the periodic beacon may only be transmitted in sectors where a WTRU has already associated with the AP. Referring to Figure 4, in discovery phase 310, AP 312 transmits a discovery beacon in a coarse manner over, for example, four sectors (C1, C2, C3, and C4) of the coverage area of the AP. WTRUs 314, 316 may receive the discovery beacon C1 transmitted in sector 1. WTRUs 318, 320 may receive the discovery beacon C2 transmitted in sector 2. During data transfer phase 330, fine directional antenna beams are used for transmitting packet data to each WTRU 314, 316, 318, 320 that is associated with the AP 312. AP 312 uses directional antenna beam F1 to communicate packet data with WTRU 314. AP 312 uses directional antenna beam F2 to communicate packet data with WTRU 316. AP 312 uses directional antenna beam F3 to communicate packet data with WTRU 318. AP 312 uses directional antenna beam F4 to communicate packet data with WTRU 320. During periodic beacon phase 350, the AP 312 transmits a periodic beacon to the WTRUs 312, 314, 316, 318 associated with the AP 312. In this example, all four WTRUs 312, 314, 316, 318 are located in sectors 1 and 2 associated with the AP 312. In order to minimize overhead, in one embodiment the periodic beacon is only transmitted in sectors where a WTRU associated with the AP is located. Accordingly, in the example depicted in Figure 3, the AP 312 transmits the periodic beacon transmitted using a coarse beam only in sectors 1 and 2 using coarse beams C1 and C2.

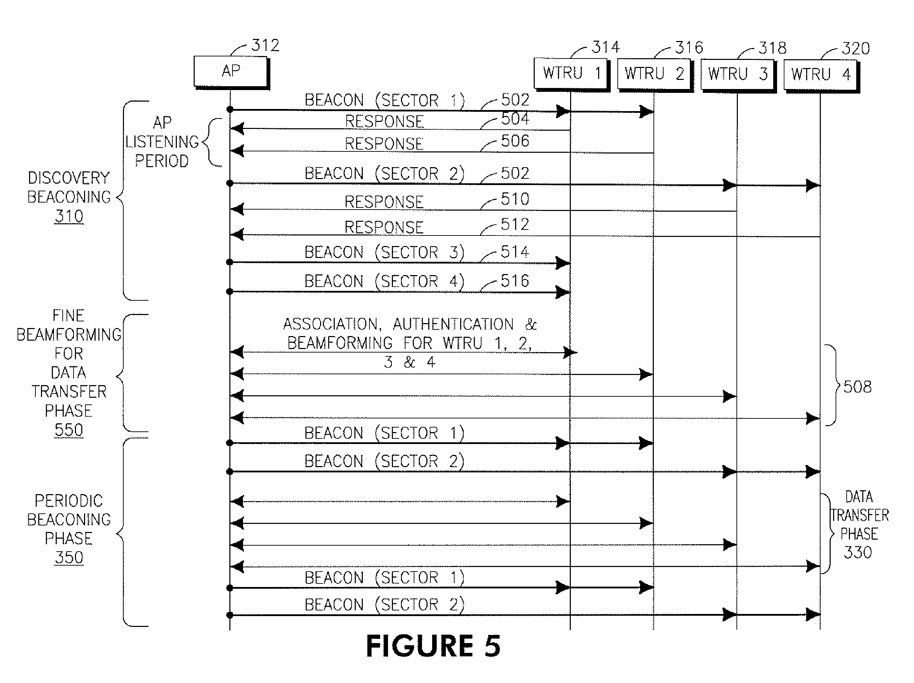

Referring to Figure 5, a signal flow diagram 500 of the discovery phase 310, data transfer phase 330, and periodic beacon phase 350 detailed above with reference to Figure 3, and also fine beamforming for data transfer phase 550 is shown. When AP 312 is powered on, the AP 312 may select a sector at random and begins to transmit a discovery beacon in that randomly chosen sector. In Figure 3, the AP 312 randomly selected sector 1 for the first discovery beacon 502 transmission. WTRU1 314 and WTRU2 316 are located in sector 1, and therefore receive the first discovery beacon 502. The discovery beacon transmission is followed by a listening period where the AP 312 listens for a response message (which may be, for example, an association request message) transmitted from a WTRU located in the sector in which the discovery beacon was just sent. The amount of time the AP listens for response messages may be fixed or adjustable based on various factors. WTRU1 312 transmits response 504, and WTRU2 316 transmits response 506. Once the listening period expires, the AP 312 selects the next sector for discovery beacon transmission. It is noted that although the embodiments disclosed show discovery beacon transmission in consecutive sectors, this is merely exemplary, and selection of sectors may be random or selected based on, for example, known traffic patterns.

After the listening period expires, AP 312 transmits a second discovery beacon 508 in sector 2. WTRU3 318 and WTRU4 320 receive the second discovery beacon 508 because WTRU3 318 and WTRU4 320 are located in the second sector of AP 312. WTRU3 318 transmits a response message 510 and WTRU4 320 also transmits a response message 512. Upon completion of a second listening period, the AP 312 transmits a third discovery beacon 514 in sector 3 and a fourth discovery beacon 516 in sector 4. As there are no WTRUs in either sector 3 or sector 4 in this example, the third and fourth listening periods expire without any additional response messages.

The discovery phase 310 could be a predetermined period of time, or it could continue until a WTRU is discovered. The discovery phase could also be periodically repeated so that new devices that enter the coverage area of the AP may be discovered. After completion of the discovery phase 310, the AP 312 focuses on the sector or sectors where WTRUs were discovered, which in this example is sector 1 and sector 2.

The discovery phase 310 is followed by the fine beamforming for data transfer phase 550. The fine beamforming for data transfer phase 550 begins with association, authentication, and beam forming between the AP 312 and the discovered WTRUs 314, 316, 318, and 320. Association and authentication may be initiated by either the WTRU or the AP, and may proceed in accordance with known IEEE 802.11 protocols. Antenna training symbols and/or weights are exchanged (signals 518) between the AP 312 and each WTRU 314, 316, 318, and 320 to allow both the AP 312 and the WTRUs 314, 316, 318, and 320 to each form fine directional beams. These fine beams are then used for packet data transmission and reception.

During the data transfer phase 330, packet data may be exchanged between the AP 312 and the WTRUs 314, 316, 318, and 320. During the data transfer phase 330, synchronization (for example, time and/or frequency synchronization) is required. The synchronization may be provided by the AP 312. The AP 312 may transmit periodic beacons in the periodic beacon phase 350. The periodic beacon phase 350 and the data transfer phase 330 may, and likely will, occur simultaneously. The AP 312 may transmit the periodic beacons in either a coarse manner, as discussed above with respect to the discovery beacons, or using fine directional antennas, much like packet data transmission. In Figure 4, the AP 312 transmits coarse periodic beacons in each sector. AP 312 transmits a first periodic beacon 520 in sector 1. WTRU1 314 and WTRU2 316 receive the first periodic beacon 520. AP 312 transmits a second periodic beacon 522 in sector 2. WTRU3 318 and WTRU4 320 receive the second periodic beacon 522. Periodic beacons are only required by WTRUs already associated with the AP 312. Therefore, the periodic beacons may only be transmitted in sectors where WTRUs have been discovered and associated with the AP 312. Accordingly, AP 312 continues to transmit the first periodic beacon 524 in sector 1 and the second periodic beacon 526 in sector 2. The time interval between periodic beacon transmissions is a beacon interval. The periodic beacons 520, 522, 524, and 526 may include information that an unassociated WTRU may use for association.

In one embodiment, the periodic beacons may transmitted by the AP 312 using the same fine directional beams that are used for packet data transmission. This is not shown in the signal flow diagram 400 of Figure 4.

The AP 312 may discontinue periodic beacon transmission when the AP 312 detects that all WTRUs associated with the AP 312 has disassociated from the AP 312. The AP 312 may be configured to periodically check to see if new WTRUs are available for association, and therefore the AP 312 may periodically revert to discovery phase 310. The AP 312 may be configured to revert to discovery phase 310 after a predetermined time period (for example, an integer multiple of the periodic beacon interval). The AP 312 may further be configured to revert to discovery phase 310 opportunistically when the AP 312 is operating in an idle mode. The AP 312 may also be configured to perform discovery phase 310 at the same time AP 312 is performing data transfer phase 330 and periodic beacon phase 350. While Figure 5 shows the message flow sequence in order, one skilled in the art will recognize that discovery phase 310, fine beamforming for data transfer phase 550, data transfer phase 330, and periodic beacon phase 350 could be occurring simultaneously with respect to differing WTRUs in the coverage area of the AP 312. Moreover, while data transfer phase 330 is shown only once in Figure 5, this is merely for simplicity of description. As data transfer is the goal of the methods, apparatus, and systems described herein, data transfer phase 330 may occur frequently on demand.

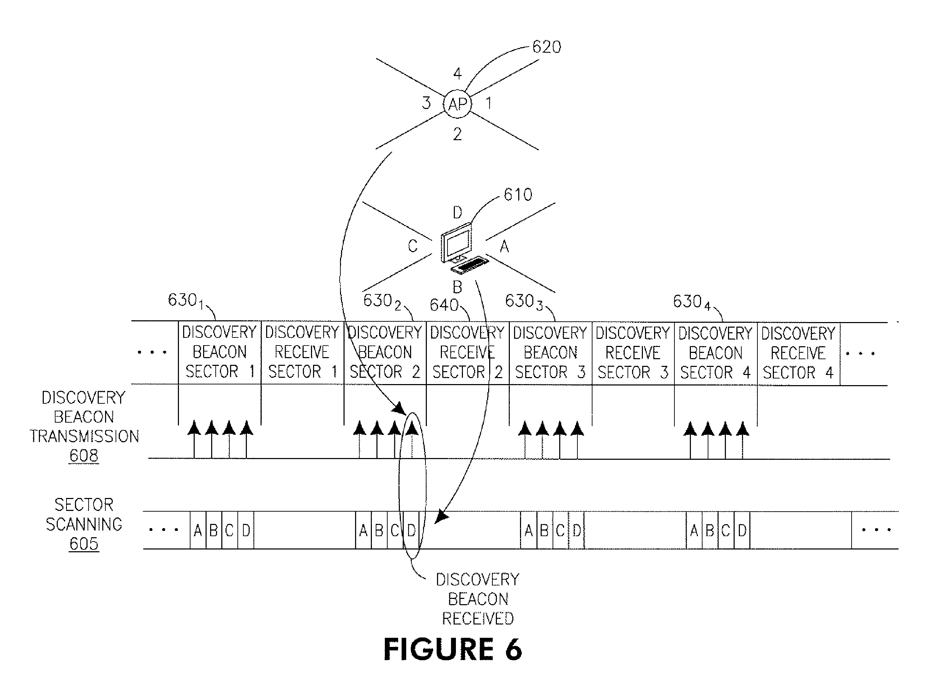

Since both an AP and a WTRU may include directional antennas, antenna beam scanning at the WTRU is important. Referring to Figure 6, WTRU 610 includes four directional antenna beams, A, B, C, and D. When the WTRU 610 enters a scanning mode, the WTRU 610 selects one of its four directional antenna beams and begins sector scanning 605. The scan period for all directional antenna beams of the WTRU may be approximately equal to the AP 620 discovery beacon transmission interval, which is the time period when discovery beacon is being transmitted by the AP in one of the sectors. This enables the WTRU 610 to receive the discovery beacon transmissions 608 during one cycle of directional discovery beacon transmissions 608 completed by the AP 620. For example, the AP 620 begins transmitting a discovery beacon $630_1$ in sector 1 with a beacon interval of, purely for example, 1 second. The WTRU 610 begins its scan of its four directional antenna beams A, B, C, D, at the same time with a scan period of 0.25 seconds. When the AP 620 begins transmitting a discovery beacon 630 in sector 2, the WTRU 610 has scanned for a discovery beacon in each of its four directional antenna beams A, B, C, and D for 0.25 seconds each. The WTRU 610 continues scanning on each of its four directional antenna beams A, B, C for a scan period of 0.25 seconds on each directional antenna beam. Finally, when WTRU 610 switches to directional antenna beam D the WTRU 610 will receive the discovery beacon $630_2$ transmitted by AP 620. The WTRU 610 may then transmit a response message in the response period 640 associated with sector 2 and begin the association process with AP 620. In one embodiment, the response period 640 may be equal to the discovery beacon transmission time interval in one sector (that is, the time interval for discovery bean transmission in each sector, $630_1$, $630_2$, and so on.) Upon association with the AP 620, the WTRU 610 may only listen to the periodic beacons transmitted by the AP 620 in the discovered sector (that is, sector D of AP 620).

In one embodiment, in a case where there is only one discovery beacon transmitted per sector (in other words, when there is no beacon train), the AP will send the beacon in all sectors in sequence. The WTRU scans each sector for a period greater than the beacon transmission time all four sectors. The WTRU will continue scanning different sectors until it receives the discovery beacon.

As can be seen from the discussion above of Figure 6, selecting a scan interval at the WTRU that allows for all WTRU sectors to be scanned during the discovery beacon interval increases the likelihood of a WTRU receiving the discovery beacon in its first scan cycle. Another technique for increasing the reliability of the discovery beacon transmission and reception is to provide a signature within the discovery beacon that identifies the AP. In a case where a WTRU is receiving discovery beacons from multiple APs, such a signature would facilitate the WTRU in selecting an appropriate AP.

The scenarios disclosed above assume that discovery beacon transmission by the AP is synchronized with the coarse sector scanning performed at the WTRU. While this may be true in practice, it is very likely that the AP and the WTRU are not synchronized. Various synchronization methods may be implemented prior to commencement of the discovery beacon procedures disclosed above. For example, synchronization with regular 2.4/5 GHz wireless devices or another Radio Access Technology (RAT) (for example, a cellular system) may be performed at the AP, WTRU, or both. Internal (local) clock synchronization may be performed at the AP, WTRU, or both, whereby the internal clock of each device may fix its clock drift (if any) once the WTRU is associated to the AP. The WTRU, the AP, or both may perform time synchronization based on received global positioning system (GPS) signals.

The above described discovery beacon transmission use coarse directional antenna beams may also be applied to an ad-hoc scenario where there is no central AP or controller. For examle, in IEEE 802.11 ad-hoc mode, any WTRU may transmit a beacon during a Target Beacon Transmission Time (TBTT). A selected WTRU may transmit discovery beacons in the manner disclosed above to discover new WTRU in the ad-hoc network. If two or more WTRUs are entering ad-hoc mode simultaneously, any one of them may randomly dedicate itself to send out discovery beacons. The discovery beacons may be sent out in all directions so that other WTRUs may discover the network. The WTRU transmitting discovery beacons enter the discovery phase after a specified time interval or during idle mode pto broadcast the discovery beacon. Since all WTRUs have the ability to transmit the discovery beacon, if a WTRU that is handling the discovery phase leaves the network, another WTRU may immediately assume the discovery phase responsibilities (i.e. transmitting the discovery beacons).

In an ad-hoc mode, all WTRUs may transmit periodic beacons. During a TBTT, a WTRU may enter and complete a random backoff period of inactivity, and may then transmit a periodic beacon. The first WTRU in the ad-hoc network to complete its random backoff period transmits a periodic beacon. The WTRU may then discover the locations of the other WTRUs in the ad-hoc network for subsequent coarse beacon transmission.

In another embodiment, a WTRU may be able to directly communicate with another WTRU using direct link protocols. Accordingly, every WTRU may be configured to transmit discovery beacons for discovering other WTRUs. The transmission of discovery beacons by a WTRU may be initiated by an AP on the basic service set (BSS) channel or an off channel (non-BSS channel), independently of an AP on the BSS channel (for example, tunneled (through the AP) direct link or directly between peers), or independently of the AP on an off channel.

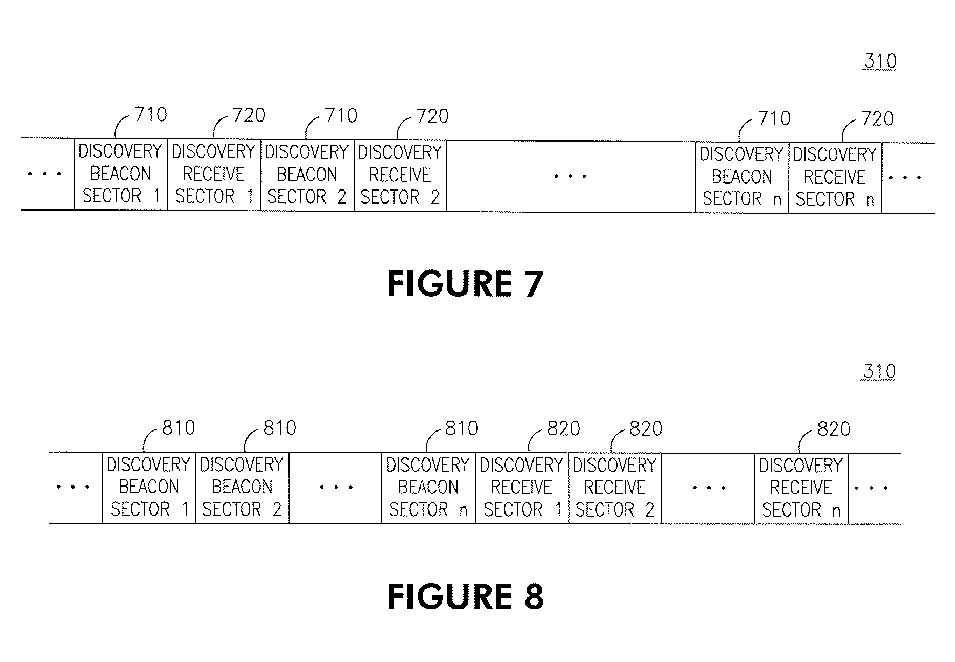

Referring to Figure 7, the discovery phase 310 disclosed above with reference to Figure 5 is shown. Multiple discovery beacons 710 are transmitted in each sector associated with the transmitting AP. After each discovery beacon 710 transmission, an associated response period 720 allows WTRUs that receive the discovery beacon to transmit a response message to the AP. It is possible that the AP may receive more than one response from the same WTRU. This could happen for example if the WTRU is located on the edge of two sectors or due to the multi-path reflections from different obstacles and surfaces in the radio transmission environment.

In order to determine the best coarse sector in which the WTRU is located, the WTRU may send a response message after receiving a discovery beacon if the WTRU has not responded to any previous discovery beacons or if the discovery beacon currently received is stronger than a previously received discovery beacon. The AP will only consider the last response received. For example, a WTRU receives a discovery beacon in sector 1 and sends a response. The same WTRU later receives a stronger discovery beacon in sector 2. The WTRU also sends a response. The WTRU also receives a discovery beacon in sector 3, but this discovery beacon is weaker than the one received in sector 2, so the WTRU does not transmit a response message. The AP determines that the WTRU is located in sector 2 based on the received response messages.

In another embodiment, referring to Figure 8, the discovery phase 310 disclosed above with reference to Figure 5 is shown. The directional discovery beacon transmissions 810 are consecutively transmitted in each sector. After a discovery beacon 810 has been transmitted in each sector of the AP, one response period 820 may be allocated for each sector of the AP. A WTRU may receive various discovery beacons 810 and determine which discovery beacon is the best based on various factors that may be predetermined or adjustable. The WTRU may then respond to the AP in the appropriate response period 820 associated with the strongest sector.

In the various embodiments disclosed above, the discovery beacon may be positioned at an arbitrary time decided by the device transmitting the discovery beacon, at an opportunistic time as decided by the device transmitting the discovery beacon, immediately after the periodic beacon period, or at a specific offset (selected as a design parameter) from the periodic beacon.

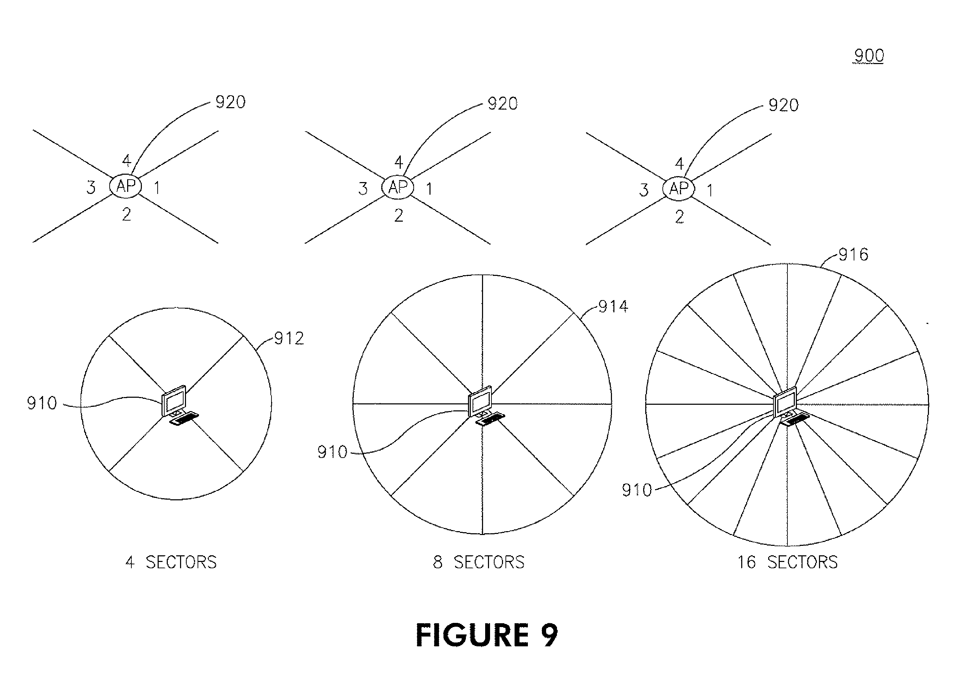

Referring to Figure 9, an illustration 900 of coarse/fine probing is shown. In this example, a WTRU is performing active scanning. A WTRU may transmit a probe message (such as a probe request message) to an AP in a case where the WTRU has not received a discovery beacon for a threshold amount of time or a threshold number of scanning cycles. This may occur, for example, when the WTRU is out of range of the discovery beacon transmission, or where objects obstruct even the coarsely transmitted discovery beacons. The WTRU begins by transmitting the probe message over four sectors 912. Due to the power allocation for the relatively coarse sectoring in this scenario, the transmission range of the probe message transmitted over four sectors 912 is not sufficient for detection by AP 920. When the WTRU 910 does not receive a response message from the AP 920, the number of sectors is increased (in this example, by a factor of two) to 8 sectors. Now, the WTRU 910 transmits the probe message over the eight sectors 914, and the more narrowly focused directional antenna beams achieve a longer transmission range. However, in this example, the transmission of the probe message over the eight sectors 914 still is insufficient for the AP 920 to receive the probe message. Again, when the WTRU 910 does not receive a response message from the AP 920 (such as, after a predetermined number of transmission cycles or after a predetermined time period), the WTRU 910 increases the number of sectors of its directional antenna by a factor of 2. Next, the WTRU 910, using 16 sectors, transmits the probe message over the 16 sectors 916. The transmission range using 16 sectors is sufficient to reach the AP 920, and the AP 920 may then transmit a probe response message. In the description above, the WTRU 910 may transmit the probe message in each of sector in a cycle until a determination is made to adjust the number of sectors used for transmission of the probe message.

When the WTRU 910 receives a probe response from the AP 920, the WTRU 910 will continue to use the fine beam that resulted in successful transmission of the probe message to listen to periodic beacons or any other broadcast from the AP 920. The AP 920 may continue to use its coarse beam (in the illustrated example, the coarse beam associated with sector 2) when transmitting periodic beacons to the WTRU 910. Both the WTRU 910 and the AP 920 may use the finely tuned narrow antenna beams for packet data transmission.

In the above disclosed embodiments, the determination of the frequency channel upon which the AP transmitted the discovery beacon was known by the WTRUs in the coverage area of the AP. This may not always be the case, and prior to receiving a discovery beacon transmitted by an AP, a WTRU may need to scan available channels to determine upon which channel the AP is transmitting on. A WTRU scanning channels to determine an AP active channel may utilize a fixed discovery channel upon which discovery beacons are transmitted. This discovery channel must be known by the AP and the WTRU a priori. In another embodiment, the AP may transmit discovery beacons on multiple channels thereby increasing the chance a WTRU will be able to detect the discovery beacon. In another embodiment, an AP may transmit discovery beacons on a fixed channel or channels using a high coding gain. In this embodiment, even if the channel is occupied by another system or disrupted due to high environmental interference, the relatively high coding gain allows a WTRU to decode the discovery beacon and access the system. In another embodiment, a WTRU may scan multiple channels at the same time, thereby reducing the time to receive a discovery beacon. In another embodiment, a WTRU may receive information regarding the channel and/or channels on which an AP will transmit the discovery beacon. This information may be provided by a second radio access technology (RAT) with which the WTRU is currently communicating. Once the WTRU receives this information, it may tune to the appropriate channel and receive the discovery beacon.

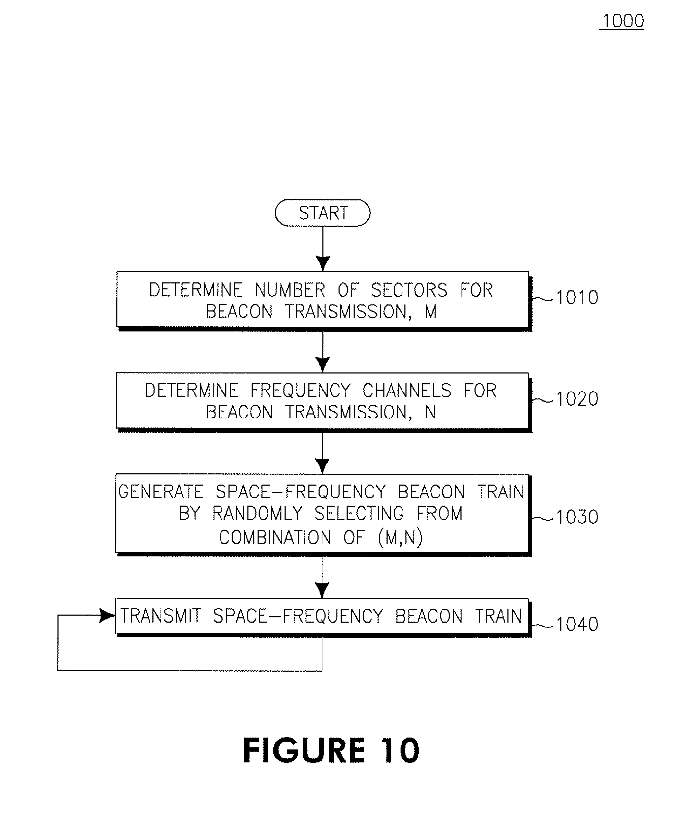

In another embodiment where the channel upon which an AP will transmit a discovery beacon is not known, space-frequency hopping may be used for discovery beacon transmission. Referring to Figure 10, a method 1000 for transmitting a space-frequency beacon begins with an AP determining a number of sectors M over which the space-frequency beacon will be transmitted, 1010. Next, the AP determines the number of frequency channels N over which the space-frequency beacon will be transmitted, 1020. The AP then generates a space-frequency beacon train by randomly selecting a combination of sector M and frequency channel N from the set of all possible combination (M, N), 1030. The AP then transmits the space-frequency beacon train, 1040. The space-frequency beacon train includes at least one space-frequency beacon transmission in each sector M and over each frequency channel N. The space-frequency beacon transmission at 1040 is then repeated continuously until the process is terminated.

Assuming M sectors and N frequency channels are possible, there are therefore M time N unique sectors-frequencies combinations, so the beaconing device should randomly transmit from among these (M,N) combinations. One possible method would be to randomly select these combinations over one cycle only once which can be referred as a space-frequency beacon train, and repeat this beacon train continuously. Therefore, previously discovered devices would know the beacon train used by a specific neighbor and focus its scanning selection (sector and frequencies) upon combinations known to be used.

A WTRU wishing to acquire a discovery beacon from the AP may lock a frequency and perform a scan using its directional antenna beams. Once the WTRU acquires the discovery beacon, the AP may signal an indication of the pseudo-random space-frequency pattern for future discovery beacon transmission.

In any of the embodiments described herein, a loose synchronization method may be applied to improve throughput. In a first loose synchronization method, adaptive beaconing is employed to adjust the beacon interval (that is, the interval between consecutive beacon transmissions). The beacon interval may adapt based on a variety of factors, including the uplink/downlink traffic ratio of a given AP, or a change in the scan period. In a second loose synchronization method, for example, in a case where there is asymmetric traffic (for example, data traffic between a set-top box (STB) and a high definition (HD) display, where downlink traffic is much higher than uplink traffic), after initial synchronization, the node with higher traffic transmits and then waits for the other node to send an acknowledgement (ACK). When regular beaconing is desired, for example, some type of predetermined event, a control packet may be appended at the end of the data or ACK packet, indicating beaconing should proceed in a regular fashion. Upon completion of the predetermined event, asymmetric data transmission may proceed as before without periodic beaconing.

After the discovery phase 310 described above, during the data transfer phase 330, several protection mechanisms may be used to address hidden node problems and deafness. In one embodiment, a WTRU transmits quarter directional Request-to-Send (QDRTS) and quarter directional Clear-to-Send (QDCTS) messages to all sectors/quarters to provide communication information to neighboring WTRUs. This protection mechanism may be augmented with a quarter directional Free-to-Receive (QDFTR) mechanism to counter any possible timing delays which may result from using a QDRTS/QDCTS message. It is noted that the use of quarter directional transmission (that is, transmitting in a pi/2 sector) is presented merely as an example and for illustration purposes only. The same methods presented herein may be applied to transmissions of any sector width. The QDRTS, QDCTS, and QDFTR may be renamed according to the sector size.

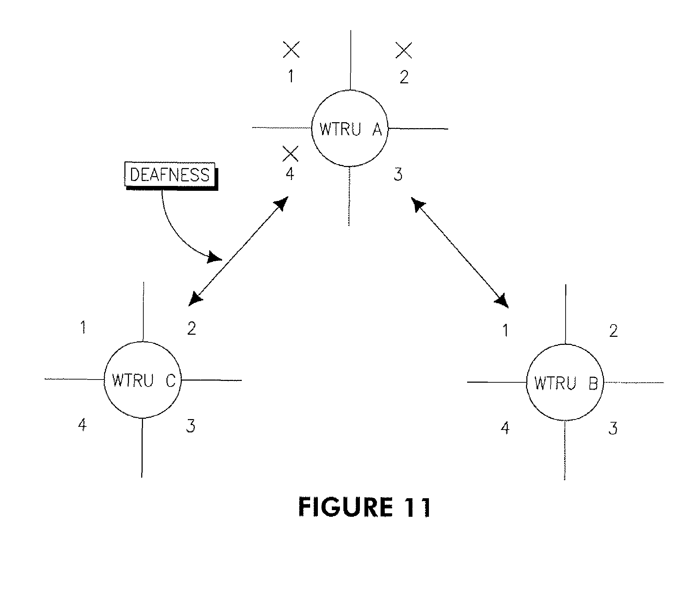

Referring to Figure 11, an example of a deafness scenario in which the destination WTRU A is in communication with another WTRU B is illustrated. In this example, three WTRUs, WTRU A, WTRU B and WTRU C, is able to perform directional communication and may transmit and receive antenna beams in four sectors, 1, 2, 3, and 4. When WTRU A communicates with WTRU. B, WTRU A blocks antenna beams in sectors 1, 2 and 4, such that WTRU A's transmit antennas are not tuned in the direction of sectors 1, 2 & 4, respectively. Therefore, WTRU A only communicates using an antenna beam in sector 3. Similarly, WTRU B, in communicating with WTRU A, only uses an antenna beam associated with sector 1. WTRU C is not aware of the communication WTRU A and WTRU B are conducting, so when WTRU C transmits a DRTS signal to WTRU A, WTRU A will not be capable of receiving the DRTS from WTRU C. In other words, WTRU A will be deaf to WTRU C's DRTS transmission.

A QDFTR frame may be required because the time duration indicated in the QDRTS field may not represent the exact time for which the medium is reserved. The QDRTS/QDCTS frame may be sent in all sectors and the transmission of these frames may be delayed due to ongoing transmissions in these sectors.

In one embodiment, the deafness problem described above in Figure 11 may be addressed by exchanging QDRTS and QDCTS signaling. This exchange will inform all surrounding WTRUs that two WTRUs are busy, and the surrounding WTRUs can block their sectors that are in the direction of the communicating WTRUs, so as not to interfere with their transmissions. This mechanism also ensures that the destination WTRU is available for communication. At the end of the packet transfer, both WTRUs may send a QDFTR message in all sectors as described below, indicating the WTRU is again free to receive.

WTRUs may set their respective network allocation vector (NAV) according to a duration field included in the QDRTS or QDCTS messages. When the NAV expires, the WTRUs use this as an indication to tune their antennas towards to communicating nodes to receive a QDFTR message from the nodes. The QDFTR message might not be used in every scenario as described below.

When a WTRU transmits a QDRTS signal in all directions, it may skip the sector where it is not allowed to transmit. There may be a small delay (for example, Inter Frame Spacing (IFS) in IEEE 802.11) where the WTRU senses the medium prior to transmitting. If the WTRU detects the medium is busy, it may skip the sector (considering it as a blocked sector) and transmit a QDRTS signal in the next sector after determining the medium is not busy, and so on. The same method may be applied when a WTRU transmits a QDCTS signal in all directions. Alternatively or additionally, the WTRU may skip the sector and then return back to the skipped sector at a later time. For example, the WTRU may return to the sector at the approximate time at which the WTRU will become unblocked (for example, based on a calculated NAV value determined from the QDRTS and QDCTS which triggered the blocking). For example, the WTRU may interrupt its ongoing directed transmission, tune to the sector that is becoming unblocked, and transmit a QDRTS, a QDCTS, or some other directional message informing other WTRUs in this sector that the WTRU is busy, and indicating an anticipated time of availability.

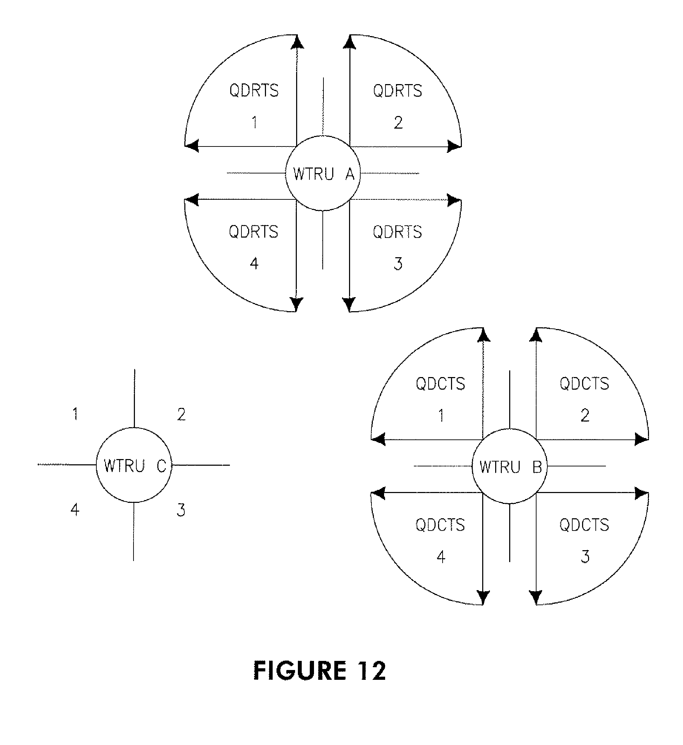

Referring to Figure 12, the WTRUs of Figure 11 are shown implementing the above described QDRTS/QDCTS protection mechanism. WTRU A may transmit a QDRTS signal in each of the four sectors associated with WTRU A. QDRTS1 is transmitted in sector 1, QDRTS2 is transmitted in sector 2, and so on. The QDRTS transmission indicates WTRU A's intent to establish communication with WTRU B. WTRU A may transmit the QDRTS signals in a rotational manner, sweeping all of the sectors associated with WTRU A in sequence, or WTRU A may transmit the QDRTS signals in a random fashion or based on some other criteria. If one or more of WTRU A's sectors is blocked for transmission, as it is communicating with another WTRU that is not shown, for example, no QDRTS signal would be sent in the blocked sector.

Upon receipt of the QDRTS signal from WTRU A, WTRU B may transmit a responsive QDCTS signal in all non-blocked sectors, on a condition that WTRU B is available for communication, informing all of WTRU B's neighbors that WTRU B will be in communication with WTRU A. If WTRU A does not receive a QDCTS response signal from WTRU B after a specified time period (which may be preconfigured, based on MAC layer messaging, or dynamically set at the WTRU based on various criteria), then WTRU A may conclude that WTRU B is unavailable. WTRU A may then transmit a QDFTR frame in all sectors informing WTRU A's neighbors that the channel is free.

A QDRTS frame and a QDCTS frame may contain an information element or field defining the transmit sector number of the WTRU (that is, the sector in which the WTRU intends to communicate). This information element or field may help the network maintain spatial diversity since all the WTRUs would know the direction of communication amongst the WTRUs in the network. Selective communication paths may then be established between WTRUs to minimize interference in the network. For example, still referring to Figure 12, QDRTS3 transmitted by WTRU A and received by WTRU C may contain information informing WTRU C that WTRU A is communicating via sector 3 of WTRU A. WTRU C may then know that communication using sector 1 or sector 3, which are directed away from WTRU A and WTRU B, would not interfere with the communication between WTRU A and WTRU B. Various algorithms may be utilized to determine spatial relations and minimize interference based on the QDCTS and QDRTS signaling.

In one embodiment, upon completion of the communication session between WTRU A and WTRU B, both WTRU A and WTRU B may send a QDFTR signal in the same manner as the QDRTS and QDCTS signals are sent, as described above. The QDFTR signal informs WTRU C and other neighbor WTRUs that WTRU A and WTRU B are free to receive packets. A QDFTR frame is a control frame similar to QDRTS and QDCTS. A WTRU receiving a QDFTR frame knows that the transmitting WTRU is finished with its communication and is available to receive any other data. The QDFTR frame may contain an indication of a time period that specifies that the transmitting WTRU will be available after that time period has elapsed. The destination of the QDFTR is a broadcast address as the QDFTR frame is directed to all neighbor WTRUs.

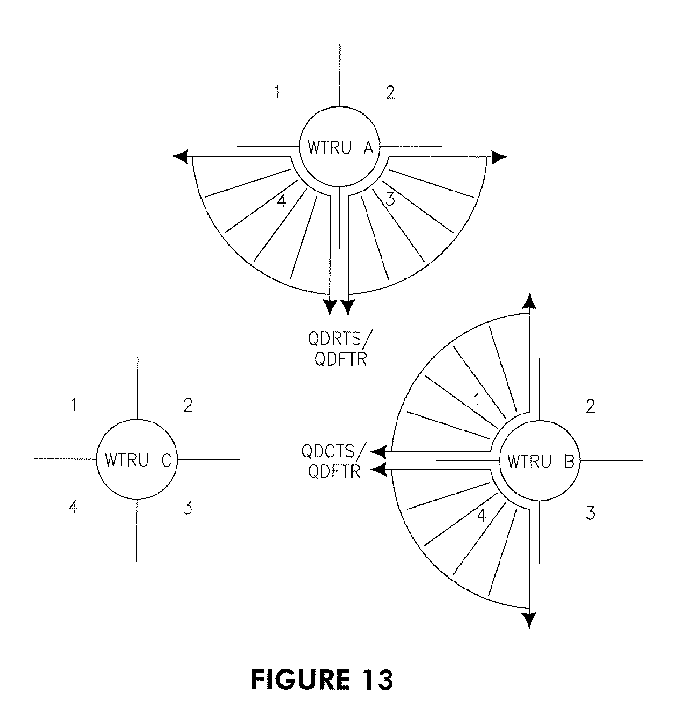

In one embodiment, WTRU A and WTRU B may send QDRTS and QDCTS in the direction of discovered WTRUs. Referring to Figure 13, an illustration of WTRU A, WTRU B, and WTRU C transmitting and receiving QDRTS frames and QDCTS frames in sectors where each WTRU expects a recipient WTRU is shown. WTRU A may send a QDRTS frame in sector 3 and sector 4 (that is, in the directions of discovered WTRU B and WTRU C) while WTRU B may only send a QDCTS frame in sector 1 and sector 4 (directed toward discovered WTRU A and WTRU C). In addition to, or alternatively, WTRU A and WTRU B may send the QDFTR signal in sectors directed toward discovered WTRUs. Alternatively, the QDFTR signal may also be sent in all of the sectors to ensure a new neighboring WTRU having recently entered the network will also receives the QDFTR frame.

In one embodiment, where a source WTRU has data to transmit, the WTRU transmits a QDRTS frame in the direction of the destination WTRU only, if the destination WTRU's location is previously known. The source WTRU then may wait for the QDCTS frame response. In response to receiving the QDCTS frame, the source WTRU may proceed with at least one of the following options. The source WTRU may transmit a QDRTS frame in all other remaining directions. The source WTRU may relay the QDCTS frame it received in all the remaining directions. The destination node may transmit a QDCTS frame in all remaining directions. In this embodiment, transmitting a QDFTR frame may not be required at the end of a data transmission since all the WTRUs receiving the QDRTS/QDCTS frames would have updated timing information in their respective NAVs, and would know the duration of the reserved medium.

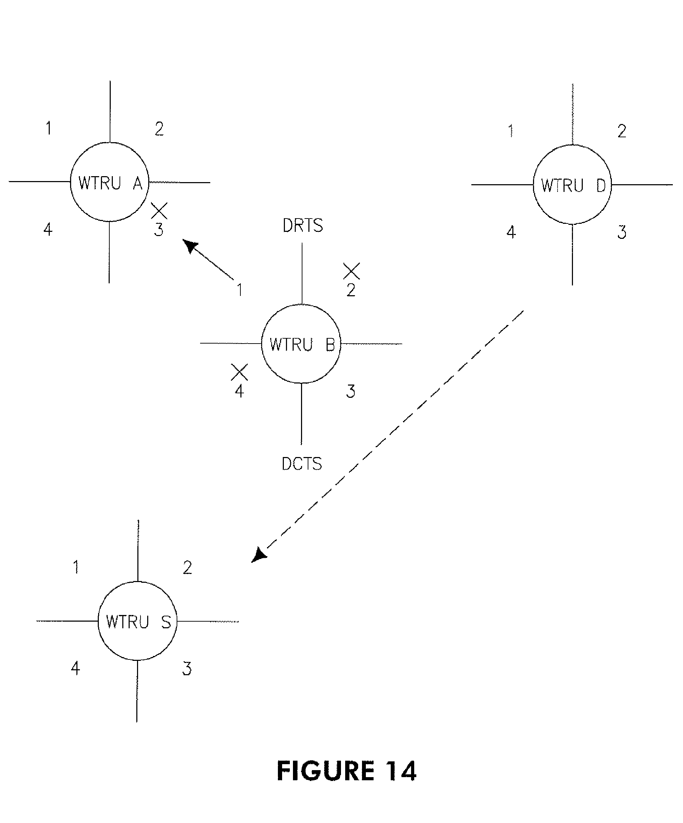

In another embodiment, the QDRTS/QDCTS protection mechanism may be used to mitigate the deafness problem described above. With reference to Figure 14, a source WTRU (WTRU S) and a destination WTRU (WTRU D) are in communication, causing WTRU B to block direction antennas associated with its sector 2 and its sector 4. Meanwhile, WTRU A has blocked directional antenna associated with its sector 3 to avoid interference with the communication between WTRU S and WTRU D. WTRU B is free to transmit from its sector 1 directional antenna to WTRU A, but a deafness problem results when WTRU B does not receive a QDCTS frame in response to a QDCTS frame due to WTRU A having blocked its sector 3.

To solve the above illustrated deafness problem, a WTRU may inform other WTRUs to delay transmission until a trigger event occurs. This trigger event may be the reception of a QDFTR frame, the expiration of a NAV timer, or the some other trigger event.

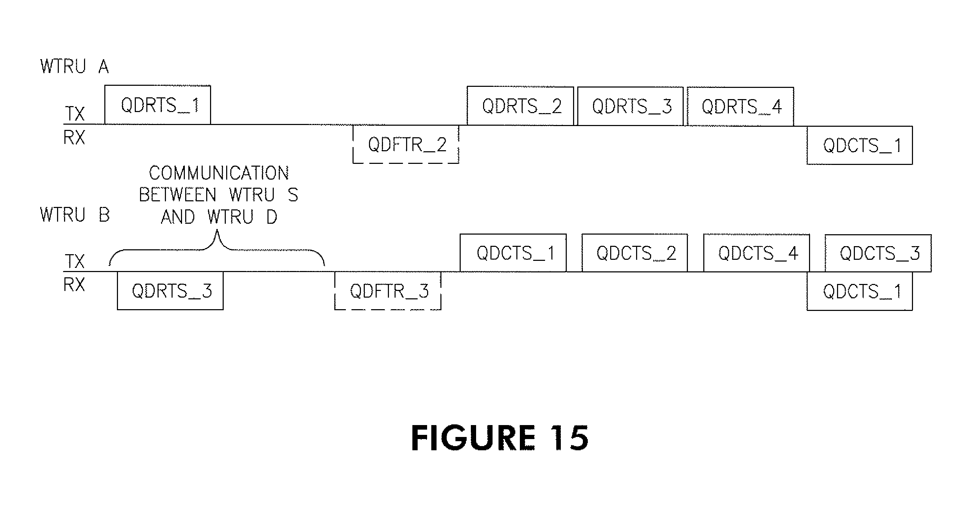

Referring to Figure 15, a signal flow diagram of WTRU A and WTRU B from Figure 14 is shown. As discussed above WTRU B determines that it has two opposite directional antennas blocked and any transmission that is received by WTRU B's remaining directional antennas would collide with the already established communication between WTRU S and WTRU D. In response to determining the deafness scenario, WTRU B transmits a QDRTS signal to WTRU A which includes an information element or field informing WTRU A to delay transmitting a responsive QDCTS signal until after WTRU A receives a QDFTR or any other FTR signal indicating the end of the transmission between WTRU S and WTRU D. Once WTRU A and WTRU B receive their respective QDFTR frames, (QDFTR_2 and QDFTR_3), WTRU B transmits a QDRTS frame and WTRU A transmits a QDCTS frame. This signaling exchange reserves the channel for communication between WTRU B and WTRU A. As shown in Figure 15, WTRU B may send a QDRTS frame in sector 2, sector 3 and sector 4 (QDRTS_2, QDRTS_3, QDRTS_4, respectively) after receiving the QDFTR frame from WTRU D. WTRU A may transmit the QDCTS frame in all the sectors (QDCTS_1, QDCTS_2, QDCTS_3, QDCTS_4, respectively). Alternatively, WTRU B may send a QDRTS frame in sector 2, sector 3 and sector 4 and again in sector 1 after receiving the QDFTR frame. In one embodiment, the QDRTS frame, the QDCTS frame, and/or the QDFTR frame is sent only in sectors where a WTRU has been discovered.

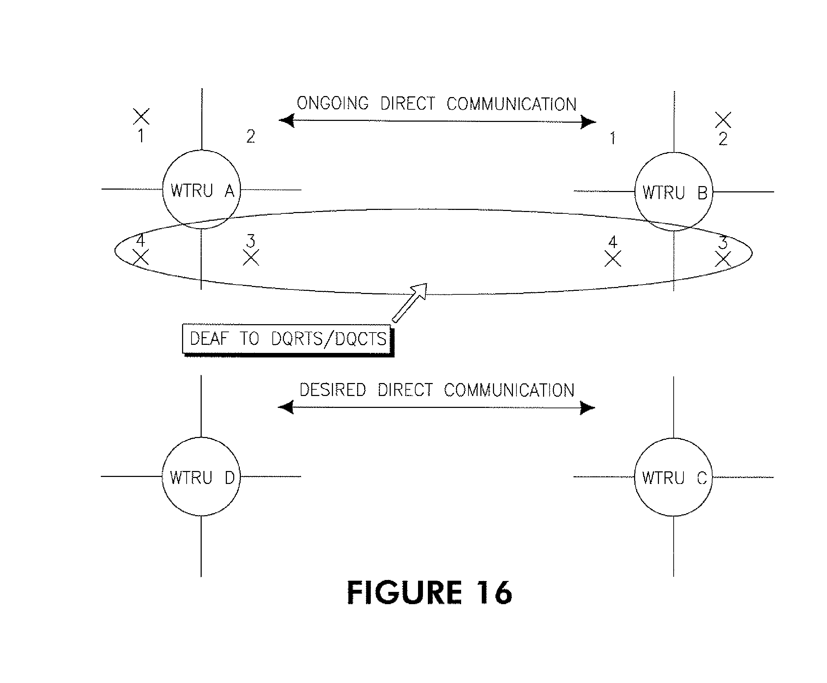

Figure 16 is an illustration of another deafness scenario where a WTRU blocks a sector due to an ongoing transmission (in another sector) and as a result, is deaf to incoming QDRTS and QDCTS from neighbor WTRUs in the blocked sector. WTRU A and WTRU B have an established directed communication and have subsequently blocked all sectors except those used for the directed communication, that is, sector 2 of WTRU A and sector 1 of WTRU B. Both WTRU A and WTRU B are now deaf to any potential QDRTS and QDCTS from WTRU C and WTRU D, as shown in Figure 16. Accordingly, WTRU A and WTRU B would be unaware of a communication session between WTRU C and WTRU D. When WTRU A and WTRU B complete their communication session, WTRU A and WTRU B should not initiate transmissions in each of their sector 3 and sector 4, as these transmissions may cause interference to the communication between WTRU C and WTRU D. This deafness problem may be avoided by specifying a minimum sector sensing time before any transmission in that sector. For example, WTRU A and WTRU B may sense the channel in each of their sector 3 or sector 4 for a time duration that ensures WTRU A and WTRU B will capture a complete WTRU C to WTRU D transmission, including any acknowledgment (ACK) frame from the recipient WTRU. In this manner, WTRU A and WTRU B may sense if either direction of the WTRU C to WTRU D communication session will be impacted. For example, the sensing time per sector may be defined as:

$$\text{Sensing time} = \text{MAX\_Packet\_duration} + \text{backoff time (for example,}$$
$$\text{short interframe spacing (SIFS))} + \text{ACK time.}$$

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

EMBODIMENTS

1. A method for device discovery, the method comprising:

   using a directional antenna.

2. The method of embodiment 1, further comprising at least one of:

   providing a dedicated beacon for discovery;
   using a directional beacon in a coarse fashion during a discovery phase;
   using a fine directional beam for data transmission or periodic beacon transmission using information received during the discovery phase;
   broadcasting a coarse periodic beacon only in discovered sectors; or
   providing a mechanism for discovery of out of range devices.

3. The method as in any one of embodiments 1-2, further comprising:

   repeating a beacon train.

4. The method as in any one of embodiments 1-3, further comprising:

   sending a discovery beacon in a plurality of directions in a time division approach around a device, wherein the discovery beacon is sent with a half power beam width of 2pi/N into N sectors.

5. The method as in any one of embodiments 1-4, further comprising:

   listening for a response to the discovery beacon.

6. The method as in any one of embodiments 1-5, wherein a channel frequency of a beacon transmission is known.
7. The method as in any one of embodiments 1-5, wherein a channel frequency of a beacon transmission is unknown.
8. The method as in any one of embodiments 1-7, further comprising:

   turning a beaconing device on.

9. The method as in any one of embodiments 1-8, further comprising:

   starting a discovery period including:

      transmitting discovery beacons to a randomly chosen first sector in a course directional beam;
      listening for a response from a surrounding device for a period of time; and
      moving to a second sector and transmitting discovery beacons.

10. The method as in any one of embodiments 1-8, further comprising:

   on a condition that discovery beacons have been sent to all coarse sectors, focusing on the sector including a discovered device.

11. The method as in any one of embodiments 1-9, further comprising:

on a condition that this is an initial discovery period, the discovery period continues for a predetermined time period or until a device is found.

12. The method as in any one of embodiments 1-11, further comprising:

associating between discovered stations;
exchanging antenna training symbols or weights; and
beamforming fine beams between discovered stations based on the exchanged training symbols or weights.

13. The method as in any one of embodiments 1-12, wherein the fine beams are formed at transmitting devices.
14. The method as in any one of embodiments 1-13, wherein the fine beams are formed at receiving devices.
15. The method as in any one of embodiments 1-14, wherein the fine beams are for high throughput data transmission and reception.
16. The method as in any one of embodiments 1-15 further comprising:

performing synchronization.

17. The method as in any one of embodiments 1-16, wherein synchronization is performed by at least one of:

sending course periodic beacons using the discovery beacon course sectors, wherein the periodic beacons are sent to sectors including discovered devices;
sending fine periodic beacons, wherein resulting fine sectors for the periodic beacons are the sectors used for data transmission, wherein a new device is associated based on the discovery beacon transmission; or
sending fine periodic beacons only on a condition that all devices are associated or on a condition that the beaconing device does not allow any additional device to associate from the sector.

18. The method as in any one of embodiments 1-17 further comprising:

discontinuing the periodic beacon; and
on a condition that the beaconing device detects that the last station (STA) from that sector has disassociated with the beaconing device or on a condition that the beaconing device detects that there are no STAs in the sector, transmitting the discovery beacon.

19. The method as in any one of embodiments 1-18 further comprising:

checking for new devices including at least one of:

periodically sending discovery beacons to all sectors; or
oppor tunistically sending, during idle mode, discovery beacons to all sectors.

20. The method as in any one of embodiments 1-19, further comprising:

performing a scanning operation.

21. The method as in any one of embodiments 1-20, wherein the scanning operation includes:

scanning for discovery beacons in each coarse sector during one completed access point (AP) cycle.

22. The method as in any one of embodiments 1-21, further comprising:

associating with an AP;
listening to the periodic beacon in the discovered sector; and
on a condition that the STA changes location, continuing to listen to the discovery beacon.

23. The method as in any one of embodiments 1-22, further comprising:

on a condition that the STA is switched on in a sector receiving periodic beacons, receiving a periodic beacon;
sending an association request based on information from the periodic beacon;
performing beam forming for data transfer; and
listening to the periodic beacons only in the discovered sector.

24. The method as in any one of embodiments 1-23, wherein one dedicated STA sends out discovery beacons to find new STAs in the network.
25. The method as in any one of embodiments 1-24, wherein the periodic beacon is broadcast by any STA.
26. The method as in any one of embodiments 1-25, wherein discovery beacons are sent in all directions.
27. The method as in any one of embodiments 1-26, further comprising:

entering the discovery phase after a specified time interval or during idle mode to broadcast the discovery beacon.

28. The method as in any one of embodiments 1-27, further comprising:

entering a random backoff;
sending the periodic beacon, on a condition that the STA is the first STA to complete backoff;
discovering sectors that contain STAs; and
sending coarse periodic beacons to the sectors that contain STAs.

29. The method as in any one of embodiments 1-28, wherein the STA functions as a temporary AP providing coordination among all STAs and maintaining network synchronization.
30. The method as in any one of embodiments 1-29, wherein any STA is able to discover every other STA.
31. The method as in any one of embodiments 1-30, further comprising:

initiating the discovery process:

through an AP on the basic service set (BSS) channel or an off channel;
independently of an AP on the BSS channel direct link or directly between peers; or
independently of the AP on an off channel.

32. The method as in any one of embodiments 1-31, wherein discovery beacon is a very short beacon sent in only sectors where no STAs have been discovered or in all sectors.
33. The method as in any one of embodiments 1-32, wherein the discovery beacon includes:

a subset of the periodic beacon content;
a basic content for functions including at least one of:

beacon detection, measurement, or association;
train of pilot symbols that indentifies that an AP is present in a specific sector; or

a train of mini beacons.

34. The method as in any one of embodiments 1-33, further comprising:

on a condition that the AP receives more than one response from the same STA, the STA responding after detecting a discovery beacon, on a condition that
the STA has not previously responded; or on a condition that the discovery beacon is stronger in the current sector than a previous one; and
considering the last response received.

35. The method as in any one of embodiments 1-34, further comprising:

sending consecutive directional discovery beacon transmissions.

36. The method as in any one of embodiments 1-35, further comprising

sending one response in the sector where STA receives a best discovery beacon.

37. The method as in any one of embodiments 1-36, further comprising locating the discovery beacon based on at least one of:

an arbitrary time decided by the beaconing device;
at an opportunistic time, as determined by the beaconing device;
on additional information obtained in finding new STAs immediately after the periodic beacon period; or
at a specific offset from the periodic beacon.

38. The method as in any one of embodiments 1-37, wherein the discovery beacon includes a signature indicating the identity of the AP.

39. The method as in any one of embodiments 1-38, wherein synchronization includes:

synchronization with regular 2.4/5 GHz wireless devices or another Radio Access Technology (RAT);
synchronization using an internal clock; or
global positioning system (GPS) based synchronization.

40. The method as in any one of embodiments 1-39, wherein the discovery beacon or the periodic beacon transmits identification information.

41. The method as in any one of embodiments 1-40, further comprising adding a periodic beacon to a sector or sending the discovery beacon more frequently in a sector based at least in part on identification information.

42. The method as in any one of embodiments 1-41, further comprising:

probing for an AP, on a condition that the discovery beacon is not received.

43. The method as in any one of embodiments 1.42, wherein probing includes:

sending a coarse probe into all sectors;
send the probe N times in each sector;
listening for a response; and
on a condition that a response is not received, dividing each coarse sector in half and resending the probe N times until a response is received or the focus of the beam cannot be narrowed.

44. The method as in any one of embodiments 1-43, wherein probing further includes:

on a condition that the response is received, continuing to use a fine beam to listen to the periodic beacon or any other broadcast.

45. The method as in any one of embodiments 1-44, further comprising detecting the beacon channel.

46. The method as in any one of embodiments 1-45, wherein detecting the beacon channel includes at least one of:

scanning a known discovery frequency;
receiving a discovery beacon containing a pointer to a channel and other broadcast information.
detecting the beacon on a known channel;
employing a course channel scan; or
acquiring the channel information aided by another RAT or wireless local area network.

47. The method as in any one of embodiments 1-46, further comprising:

sending the discovery beacons in a pseudo-random fashion over multiple sectors and frequency channels;
forming a train from each beacon or mini-beacon; and
sending the train over a randomly chosen frequency and a randomly chosen sector with no repetition in one cycle.

48. The method as in any one of embodiments 1-47, further comprising:

hopping space and time to listen to the beacon on a condition that a pseudo random patter.

49. A wireless transmit/receive unit configured to perform the method as in any one of embodiments 1-48.

50. An access point configured to perform the method as in any one of embodiments 1-48.

51. A base station configured to perform the method as in any one of embodiments 1-48.

52. A method for medium access control implemented in a first wireless transmit receive unit (WTRU), the method comprising:

sending a quarter directional request-to-send frame to a second WTRU; and

receiving a quarter directional clear-to-send frame from the second WTRU.

53. The method as in embodiment 52, wherein the request-to-send frame has a half-power beamwidth of $\pi/2$.

54. A method as in any preceding embodiment, further comprising sending a quarter directional free-to-receive frame to inform surrounding WTRUs that the first WTRU is free to receive data packets from the surrounding WTRUs.

55. A method for medium access control implemented in a first wireless transmit receive unit (WTRU) configured to transmit directional beams in sectors, comprising:

blocking a fine tuned beam within a portion of a sector directed at a second WTRU; and
transmitting a fine tuned beam within a portion of a sector directed at a third WTRU.

56. The method as in embodiment 55, wherein the transmitting includes a directional request-to-send frame.

57. The method as in embodiment 55, wherein the transmitting includes a directional clear-to-send frame.

58. A method as in any of embodiments 55-57, further comprising unblocking the blocked fine tuned beam on a condition that the first WTRU determines that the second WTRU is no longer transmitting to another WTRU.

59. A method for medium access control implemented in a wireless transmit receive unit (WTRU) communicating peer-to-peer with a second WTRU, comprising:

adaptively adjusting a beacon interval according to an uplink and a downlink traffic ratio.

60. The method as in embodiment 59, further comprising performing an initial synchronization and allowing the WTRU with higher traffic to be the first WTRU to transmit.

61. A method as in embodiment 59 or 60, further comprising appending a special control packet at the end of a data packet or an ACK packet in response to a special event; and resuming adaptive adjustment of the beacon interval after the special event.

62. A wireless transmit receive unit comprising a processor configured to perform a method as in any preceding method.

63. A method for medium access control implemented in a first wireless transmit receive unit (WTRU), the method comprising:

sending a directional request-to-send (RTS) frame to a second WTRU; and
receiving a directional clear-to-send (CTS) frame from the second WTRU.

64. A method as in any preceding embodiment, further comprising waiting for the directional CTS frame before sending data to the second WTRU.

65. A method as in any preceding embodiment, further comprising sending a directional free-to-receive (FTR) frame to inform surrounding WTRUs that the first WTRU is free to receive data packets from the surrounding WTRUs on a condition that a data transmission to the second WTRU is completed.

66. The method as in embodiment 65, wherein the FTR frame includes a frame structure that includes a time period to specify that the first WTRU is available after that time period.

67. A method as in any preceding embodiment, wherein the frame is a quarter directional frame having a beamwidth of pi/2.

68. A method as in any preceding embodiment, wherein the first WTRU communicates with the second WTRU in an ad-hoc implementation, further comprising scanning each antenna sector in sequence, looking for surrounding WTRUs attempting to initiate a communication, wherein scanning durations for each antenna sector are synchronized to a master clock.

69. The method as in any preceding embodiment, wherein the directional frame is identified by an antenna sector and the directional frame includes a frame structure having an information element indicating the antenna sector on which the data frame is to be transmitted.

70. A method as in any preceding embodiment, further comprising the first WTRU setting its network allocation vector according to a duration field included in the directional RTS frame.

71. The method as in embodiment 70, wherein the first WTRU tunes its antenna sectors toward communicating nodes to receive a FTR frame in response to expiration of the network allocation vector.

72. A method as in any preceding embodiment, further comprising blocking an antenna sector that is directed towards an existing communication transmission between two neighboring WTRUs to avoid interference.

73. The method as in embodiment 72, wherein no directional RTS frame is sent in a direction of a blocked sector.

74. A method as in any preceding embodiment, wherein the first WTRU sends the directional RTS on antenna sectors directed to each discovered surrounding WTRU.

75. A method as in any preceding embodiment, wherein the first WTRU only sends the directional RTS on an antenna sector directed to the second WTRU.

76. The method as in embodiment 75, further comprising the first WTRU sending the directional RTS on all remaining antenna sectors.

77. The method as in embodiment 75, further comprising the first WTRU relaying the received directional CTS on all remaining antenna sectors.

78. A method as in embodiment 65, wherein the first WTRU sends the directional FTS frame on antenna sectors directed to each discovered surrounding WTRU.

79. A method as in any preceding embodiment, further comprising the first WTRU sending the RTS frame including a special field to inform the second WTRU to delay sending the directional CTS frame until a FTR frame is received from a surrounding WTRU indicating the end of an existing neighboring communication transmission.

80. A method as in any preceding embodiment, further comprising the first WTRU specifying a minimum sector sensing time before any transmission to ensure a complete neighboring transmission is detected.

81. The method as in embodiment 80, wherein the sensing time is set to a sum of a maximum packet duration, a backoff duration and an ACK duration.

82. A method as in any preceding embodiment, wherein the communication is implemented via a central hub, further comprising sending the directional RTS frame via the central hub and receiving the directions CTS frame via the central hub.

83. The method as in embodiment 82, wherein the directional RTS frame is sent on an antenna sector that is designated as the primary sector, and all other sectors are designated as secondary sectors.

84. The method as in embodiment 83, wherein the first WTRU receives the directional CTS in the primary sector with an indication from the central hub as to when to start transmission.

85. The method as in embodiment 83, wherein the first WTRU sends the directional RTS on all antenna sectors.

86. A wireless transmit receive unit comprising a processor configured to perform a method as in any preceding method.

A1. A method for use in an access point (AP) having a beamforming antenna configured to generate a plurality of directional antenna beams, the method comprising:

> generating a discovery beacon for use in associating with a wireless transmit/receive unit (WTRU);
> transmitting the discovery beacon to a plurality of sectors associated with the AP using coarsely focused directional antenna beams;
> listening for a response message from a WTRU after transmission of the discovery beacon;
> on a condition that a response message is received from the WTRU, establishing a finely focused directional antenna beam for communicating with the WTRU;
> communicating packet data with the WTRU using the finely focused directional antenna beam; and
> transmitting a periodic beacon to the WTRU using one of the coarsely focused directional antenna beams.

A2. The method of embodiment A1, wherein the AP is configured to operate in the 60 gigahertz frequency band.

A3. The method of embodiment A1, wherein the transmitting the discovery beacon includes transmitting information associated with the geographic coverage of the coarsely focused directional antenna beams.

A4. The method of embodiment A3, wherein the response message received from the WTRU includes an indication of which coarsely focused directional antenna beam was received by the WTRU.

A5. The method of embodiment A1, wherein the discovery beacon includes a subset of information included in the periodic beacon.

A6. The method of embodiment A1, further comprising:

> generating a rotational sequence of sectors associated with the AP, wherein the transmitting the discovery beacon to a plurality of sectors associated with the AP is performed in accordance with the rotational sequence.

A7. The method of embodiment A1, further comprising:

generating a random sequence of sectors associated with the AP, wherein the transmitting the discovery beacon to a plurality of sectors associated with the AP is performed in accordance with the random sequence.

A8. The method of embodiment A1, wherein the listening for a response message from a WTRU is performed after transmission of the discovery to each of the plurality of sectors associated with the AP.

A9. The method of embodiment A1, further comprising:

dynamically adjusting a first interval at which the transmitting the discovery beacon is performed; and
dynamically adjusting a second interval at which the transmitting the periodic beacon is performed.

A10. The method of embodiment A9, wherein the first interval is different than the second interval.

A11. A method for use in an access point (AP) comprising an antenna configured to generate a plurality of directional beams, the method comprising:

determining a number of the plurality of directional beams;
determining a plurality of frequency channels over which to transmit a discovery beacon;
generating a discovery beacon train that comprises a discovery beacon associated with each of the plurality of directional beams and each of the plurality of frequency channels;
transmitting the discovery beacon train.

A12. An access point (AP) comprising:

a processor configured to generate a discovery beacon for use in associating with a wireless transmit/receive unit (WTRU);
a beamforming antenna configured to generate a plurality of coarse directional antenna beams and to transmit the discovery beacon using the plurality of coarse directional antenna beams;
a receiver configured to listen for a response message from a WTRU after transmission of the discovery beacon;
wherein the beamforming antenna is further confgured to, on a condition that a response message is received from the WTRU, generate a finely focused directional antenna beam for communicating packet data with the WTRU, and to transmit a periodic beacon to the WTRU using one of the plurality of coarse focused directional antenna beams.

A13. The AP of embodiment A12, wherein the AP is configured to operate in the 60 gigahertz frequency band.

A14. The AP of embodiment A12, wherein the processor is further configured to generate a plurality of discovery beacons and to include in each of the plurality of discovery beacons information associated with the geographic coverage of one of the plurality of the coarse directional antenna beams that will be used for transmission of that discovery beacon.

A15. The AP of embodiment A14, wherein the receiver is further configured to receive a response message from the WTRU that includes an indication of which coarse directional antenna beam was received by the WTRU,

A16. The AP of embodiment A12, wherein the discovery beacon includes a subset of information included in the periodic beacon.

A17. The AP of embodiment A12, wherein the beamforming antenna is further configured to transmit the discovery beacon according to a rotational sequence of the plurality of coarse directional antenna beams.

A18. The AP of embodiment A12, wherein the beamforming antenna is further configured to transmit the discovery beacon according to a random sequence of the plurality of coarse directional antenna beams.

A19. The AP of embodiment A12, wherein the receiver is further configured to listen for a response message from a WTRU after the beamforming antenna transmits the discovery beacon using each of the plurality of coarse directional antenna beams.

A20. The AP of embodiment A12, wherein the beamforming antenna is further configured to dynamically adjust a first interval at which the discovery beacon is transmitted; and to dynamically adjust a second interval at which the periodic beacon is transmitted.

## Claims

1. A method for use in an IEEE 802.11 access point (AP), the method comprising:

generating a discovery beacon for use in associating with a wireless transmit/receive unit (WTRU);
transmitting the discovery beacon via a plurality of quasi-omni directional antenna beams, wherein each of the plurality of quasi-omni directional antenna beams carries the discovery beacon and an indication of a respective sector;
listening for a response message from a WTRU after transmission of the discovery beacon, wherein the response message is for use in associating with the AP and includes an indication of a sector associated with the WTRU;
on a condition that a response message is received from the WTRU, associating with the WTRU and establishing a focused directional antenna beam for communicating with the WTRU; and
communicating packet data with the WTRU using the focused directional antenna beam.

2. The method of claim 1, further comprising:

transmitting a periodic beacon to the WTRU using a quasi-omni directional antenna beam associated with the indication of a sector included in the response message from the WTRU.

3. The method of claim 1, further comprising:

generating a random sequence of quasi-omni sectors associated with the AP, wherein the transmitting a plurality of quasi-omni directional antenna beams is performed in accordance with the random sequence.

4. The method of claim 1, wherein the listening for a response message from a WTRU is performed after completion of the transmitting of the discovery beacon via all of the quasi-omni directional antenna beams.

5. An IEEE 802.11 access point (AP) comprising:

a processor configured to generate a discovery beacon for use in associating with a wireless transmit/receive unit (WTRU);
a beamforming antenna configured to transmit a plurality of quasi-omni directional antenna beams, wherein each of plurality of quasi-omni directional antenna beams carries the discovery beacon and an indication of a respective sector; ans
a receiver configured to listen for a response message from a WTRU after transmission of the discovery beacon, wherein the response message is for use in associating with the AP and includes an indication of a sector associated with the AP,
wherein the beamforming antenna is further configured to, on a condition that a response message is received from the WTRU, generate a focused directional antenna beam for communicating packet data with the WTRU, and to transmit packet data with the WTRU using the focused directional antenna beam.

6. The AP of claim 5, wherein the beamforming antenna is further configured to a periodic beacon to the WTRU using a quasi-omni directional antenna beam associated with the indication of a sector received from the WTRU.

7. The AP of claim 5, wherein the beamforming antenna is further configured to transmit the plurality of quasi-omni directional antenna beams to a random sequence of sectors associated with the AP.

8. The AP of claim 5, wherein the receiver is further configured to listen for a response message from a WTRU after completion of the transmission of all of the plurality of quasi-omni directional antenna beams.

9. A method for use in an IEEE 802.11 wireless transmit/receive unit (WTRU), the method comprising:

receiving at least one of a plurality of quasi-omni directional antenna beams from an IEEE 802.11 access point (AP), wherein each of the plurality of quasi-omni directional antenna beams is directed to a respective plurality of sectors associated with the AP, wherein each of the plurality of quasi-omni directional antenna beams carries a discovery beacon for use in associating with the AP and including an indication of a respective sector associated with the AP;
transmitting a response message from the WTRU to the AP, after reception of a discovery beacon, wherein the response message is for use in associating with the AP and includes an indication of a sector associated with the AP, wherein the sector associated with the AP is determined based on received quasi-omni directional antenna beams;
associating with the AP based on one of the received discovery beacons;

establishing a focused directional antenna beam for communicating with the AP; and
communicating packet data with the AP using the focused directional antenna beam.

10. The method of claim 9, further comprising:

receiving a periodic beacon from the AP via a quasi-omni directional antenna beam associated with the transmitted indication of the sector associated with the AP.

11. The method of claim 9, wherein transmitting the response message from the WTRU to the AP occurs after the AP transmits all quasi-omni directional antenna beams.

12. An IEEE 802.11 wireless transmit/receive unit (WTRU) comprising:

a receiver configured to receive at least one of a plurality of quasi-omni directional antenna beams from an IEEE 802.11 access point (AP), wherein each of the plurality of quasi-omni directional antenna beams is directed to a respective plurality of sectors associated with the AP, wherein each of the plurality of quasi-omni directional antenna beams carries a discovery beacon for use in associating with the AP and including an indication of a respective sector associated with the AP;
a transmitter configured to transmit a response message to the AP, after reception of a discovery beacon, wherein the response message is for use in associating with the AP and includes an indication of a sector associated with the AP, wherein the sector associated with the AP is determined based on received quasi-omni directional antenna beams; and
a processor, coupled to the receiver and the transmitter, configured to associate with the AP based on one of the received discovery beacons,
wherein the transmitter is further configured to establish a focused directional antenna beam for communicating with the AP, and to communicate packet data with the AP using the focused directional antenna beam.

13. The WTRU of claim 12, wherein the receiver is further configured to receive a periodic beacon from the AP via a quasi-omni directional antenna beam associated with the transmitted indication of the sector associated with the AP.

14. The WTRU of claim 12, wherein the transmitter is further configured to transmit the response message from to the AP after the AP transmits all quasi-omni directional antenna beams.

FIGURE 1A

**FIGURE 1B**

**FIG. 1C**

200

```
        ( START )
           │
           ▼
┌──────────────────────────────┐
│  GENERATE  DISCOVERY  BEACON  FOR  │───210
│         DISCOVERY            │
└──────────────────────────────┘
           │
           ▼
┌──────────────────────────────┐
│ TRANSMIT  DISCOVERY  BEACON  IN  COARSE │───220
│          MANNER             │◄─┐
└──────────────────────────────┘  │
           │                      │
           ▼                      │
          ╱230                    │
        ╱      ╲                  │
  NO  ╱ASSOCIATION╲───────────────┘
◄────╲  REQUEST? ╱
      ╲        ╱
        ╲    ╱
          │
         YES
           │
           ▼
┌──────────────────────────────┐
│ IDENTIFY  SECTOR  OF  WTRU  TRANSMITTING │───240
│       ASSOCIATION  REQUEST      │
└──────────────────────────────┘
           │
           ▼
┌──────────────────────────────┐
│  PERFORM  FINE  BEAM  FORMING  PROCESS  │───250
└──────────────────────────────┘
```

260                                          270

```
┌──────────────────────────┐   ┌──────────────────────────────┐
│ TRANSMIT  PERIODIC  BEACON │   │ TRANSMIT/RECEIVE  DATA  USING  │
└──────────────────────────┘   │ FINE  DIRECTIONAL  BEAM  BASED │
                               │     ON  IDENTIFIED  SECTOR     │
                               └──────────────────────────────┘
           │                              │
           └──────────────┬───────────────┘
                          ▼
                       ( END )
```

# FIGURE 2

EP 2 760 233 A1

**FIGURE 3**

DISCOVERY PHASE
310

DATA TRANSFER PHASE
330

PERIODIC BEACON PHASE
350

COARSE BEAM

FINE BEAM

COARSE BEAM

**FIGURE 4**

**FIGURE 5**

EP 2 760 233 A1

FIGURE 6

_310_

| ... | DISCOVERY BEACON SECTOR 1 | DISCOVERY RECEIVE SECTOR 1 | DISCOVERY BEACON SECTOR 2 | DISCOVERY RECEIVE SECTOR 2 | ... | DISCOVERY BEACON SECTOR n | DISCOVERY RECEIVE SECTOR n | ... |

710  720  710  720  710  720

## FIGURE 7

_310_

| ... | DISCOVERY BEACON SECTOR 1 | DISCOVERY BEACON SECTOR 2 | ... | DISCOVERY BEACON SECTOR n | DISCOVERY RECEIVE SECTOR 1 | DISCOVERY RECEIVE SECTOR 2 | ... | DISCOVERY RECEIVE SECTOR n | ... |

810  810  810  820  820  820

## FIGURE 8

EP 2 760 233 A1

900

920

4
3 (AP) 1
2

920

4
3 (AP) 1
2

920

4
3 (AP) 1
2

916

914

912

910

910

910

4 SECTORS

8 SECTORS

16 SECTORS

FIGURE 9

EP 2 760 233 A1

1000

START

DETERMINE NUMBER OF SECTORS FOR
BEACON TRANSMISSION, M ~1010

DETERMINE FREQUENCY CHANNELS FOR
BEACON TRANSMISSION, N ~1020

GENERATE SPACE-FREQUENCY BEACON TRAIN
BY RANDOMLY SELECTING FROM
COMBINATION OF (M,N) ~1030

TRANSMIT SPACE-FREQUENCY BEACON TRAIN ~1040

# FIGURE 10

**FIGURE 11**

**FIGURE 12**

FIGURE 13

**FIGURE 14**

WTRU A

TX | QDRTS_1 |     QDRTS_2 | QDRTS_3 | QDRTS_4

RX     QDFTR_2     QDCTS_1

COMMUNICATION
BETWEEN WTRU S
AND WTRU D

WTRU B

TX     QDCTS_1 | QDCTS_2 | QDCTS_4 | QDCTS_3

RX | QDRTS_3 |     QDFTR_3     QDCTS_1

# FIGURE 15

EP 2 760 233 A1

ONGOING DIRECT COMMUNICATION

WTRU A

WTRU B

DEAF TO DQRTS/DQCTS

DESIRED DIRECT COMMUNICATION

WTRU D

WTRU C

**FIGURE 16**

Europäisches
Patentamt

European
Patent Office

Office européen
des brevets

# EUROPEAN SEARCH REPORT

Application Number

EP 14 16 5450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/232035 A1 (CORDEIRO CARLOS [US] ET AL) 17 September 2009 (2009-09-17) * paragraphs [0020], [0023] - [0026] * ----- | 1-14 | INV. H04W16/28 |
| A | US 2009/232106 A1 (CORDEIRO CARLOS [US] ET AL) 17 September 2009 (2009-09-17) * the whole document * ----- | 1-14 | |
| A | "IEEE Standard for Information technology - Telecommunications and information exchange between systems - Local and metropolitan area networks - Specific requirements. Part 15.3: Wireless Medium Access Control (MAC) and Physical Layer (PHY) Specifications for High Rate Wireless Personal Area Networks", IEEE STANDARD, IEEE, PISCATAWAY, NJ, USA, 12 October 2009 (2009-10-12), pages C1-187, XP017604237, ISBN: 978-0-7381-6050-4 * section 13. Beamforming * ----- | 1-14 | |
| A | WO 2009/114621 A2 (INTEL CORP [US]; KESSELMAN ALEX [IL]; CADEIRO CARLOS [US]; TRAININ SOL) 17 September 2009 (2009-09-17) * page 8, line 11 - page 18, line 9 * ----- | 1-14 | TECHNICAL FIELDS SEARCHED (IPC) H04W |

The present search report has been drawn up for all claims

| Place of search | Date of completion of the search | Examiner |
|---|---|---|
| Munich | 2 June 2014 | Zembery, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 5450

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2014

| Patent document cited in search report | | Publication date | Patent family member(s) | | Publication date |
|---|---|---|---|---|---|
| US 2009232035 | A1 | 17-09-2009 | CN | 101651952 A | 17-02-2010 |
| | | | EP | 2253104 A2 | 24-11-2010 |
| | | | JP | 5002064 B2 | 15-08-2012 |
| | | | JP | 2011514107 A | 28-04-2011 |
| | | | KR | 20100127777 A | 06-12-2010 |
| | | | TW | 201006153 A | 01-02-2010 |
| | | | US | 2009232035 A1 | 17-09-2009 |
| | | | WO | 2009114574 A2 | 17-09-2009 |
| US 2009232106 | A1 | 17-09-2009 | NONE | | |
| WO 2009114621 | A2 | 17-09-2009 | CN | 101965743 A | 02-02-2011 |
| | | | EP | 2253166 A2 | 24-11-2010 |
| | | | EP | 2309595 A2 | 13-04-2011 |
| | | | JP | 5073066 B2 | 14-11-2012 |
| | | | JP | 2011514761 A | 06-05-2011 |
| | | | KR | 20100107078 A | 04-10-2010 |
| | | | KR | 20110017016 A | 18-02-2011 |
| | | | US | 2009232063 A1 | 17-09-2009 |
| | | | WO | 2009114621 A2 | 17-09-2009 |

EPO FORM P0459

For more details about this annex : see Official Journal of the European Patent Office, No. 12/82

**EP 2 760 233 A1**

**Patent documents cited in the description**

- US 61307777 A
- US 61308218 A
- US 61329303 A